(19) Europäisches Patentamt
European Patent Office
Office européen des brevets

(11) EP 4 011 622 A1

(12) **EUROPEAN PATENT APPLICATION**
published in accordance with Art. 153(4) EPC

(43) Date of publication:
**15.06.2022 Bulletin 2022/24**

(21) Application number: **20853416.4**

(22) Date of filing: **04.08.2020**

(51) International Patent Classification (IPC):
***B32B 27/36*** *(2006.01)* ***B32B 7/023*** *(2019.01)*
***B32B 7/027*** *(2019.01)* ***B32B 27/30*** *(2006.01)*

(52) Cooperative Patent Classification (CPC):
**B32B 7/023; B32B 7/027; B32B 27/30; B32B 27/36**

(86) International application number:
**PCT/JP2020/029751**

(87) International publication number:
**WO 2021/029266 (18.02.2021 Gazette 2021/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.08.2019 JP 2019146934**

(71) Applicants:
- **MITSUBISHI GAS CHEMICAL COMPANY, INC.**
  **Chiyoda-ku**
  **Tokyo 100-8324 (JP)**
- **MGC Filsheet Co., Ltd.**
  **Tokorozawa-shi, Saitama 359-1164 (JP)**

(72) Inventors:
- **TOKITA, Atsuhiro**
  **Toyonaka-shi, Osaka 561-0823 (JP)**
- **NONAKA, Kenta**
  **Toyonaka-shi, Osaka 561-0823 (JP)**
- **TAKASAKI, Masato**
  **Toyonaka-shi, Osaka 561-0823 (JP)**

(74) Representative: **Hoffmann Eitle**
**Patent- und Rechtsanwälte PartmbB**
**Arabellastraße 30**
**81925 München (DE)**

# (54) RESIN SHEET FOR MOLDING AND MOLDED ARTICLE USING SAME

(57) The present invention provides a resin sheet for molding that has a high-hardness resin layer that includes a high-hardness resin on at least one surface of a base material layer that includes a polycarbonate resin (a1), the high-hardness resin layer having a hardcoat layer or a hardcoat anti-glare layer layered on at least one side thereof. The glass transition points of the polycarbonate resin (a1) and the high-hardness resin satisfy the following relationship: -10°C ≤ (the glass transition point of the high-hardness resin) - (the glass transition point of the polycarbonate resin (a1)) ≤ 40°C. The in-plane retardation of the resin sheet as measured at a wavelength of 543 nm is at least 4,000 nm. A resin film (X) that has an in-plane retardation of no more than 50 nm as measured at a wavelength of 543 nm is stuck to one side of the resin sheet by means of an adhesive layer that includes an adhesive.



Processed by Luminess, 75001 PARIS (FR)

## Description

TECHNICAL FIELD

The present invention relates to a resin sheet for molding and a molded article obtained by using the same.

BACKGROUND ART

For automobile interior parts such as instrument covers and component parts of display surfaces of home appliances, office automation equipments, personal computers, small portable devices and the like, glass plates, transparent resin plates, etc. are used, and for frame parts for holding these components and the like, resin molded bodies are used. Meanwhile, for component parts of touch panel type display surfaces to be used for mobile phone terminals and the like, products in which a transparent sheet, in particular, a glass plate is bonded to a frame part made of an injection-molded resin with a double-sided adhesive tape or the like are used. Regarding the touch panel type display surface, the thinner it is, the better from the viewpoint of the response speed, and a certain thickness or more is required from the viewpoint of the strength. For this reason, a material having a high elastic modulus is selected. In addition, scratch resistance, fingerprint wiping-off properties, etc. are also required.

Resin molded bodies to be used for the above-described applications can be produced by forming a resin sheet. In this regard, for imparting characteristics according to the applications, various methods have been devised. For example, in such methods, a resin sheet is modified with a hard coat layer, a decorative sheet or the like, or resin layers with different compositions are layered to constitute a resin sheet, or the composition of a resin to be used is adjusted.

As the decorative sheet, for example, an acrylic resin is used, and a sheet having a hard coat layer, a sheet in which a design such as printing is provided and a film is further bonded thereto, etc. are also used.

For example, Patent Document 1 discloses a decorative sheet in which a transparent acrylic resin sheet layer, a pattern printing ink layer, an ABS resin sheet layer and an ABS resin backer layer are layered in this order from the surface side. Patent Document 2 discloses a multilayer film in which a layer made of a methacrylic resin and acrylic rubber particles is layered on a polycarbonate resin layer, and discloses a decorative sheet in which one surface of the multilayer film is decorated and a thermoplastic resin sheet is layered on the decorated surface. The document also discloses a decorative molded article produced by injection molding a thermoplastic resin on the decorated surface.

Patent Document 3 discloses a resin molded article obtained by molding a sheet in which a thermosetting type or ultraviolet curable type hard coat layer is provided on a resin base material.

Patent Document 4 discloses a decorative hard coat film having a layer formed by using a hard coat paint having a specific composition on one surface of a base material film, and describes that a print layer may be provided on the base material film. This decorative film can be thermoformed. The decorative film of Patent Document 4 is integrated with a resin for molding to produce a decorative molded article.

Patent Document 5 discloses a layered sheet having a coating layer mainly composed of an acrylic resin on one surface of a base material layer mainly composed of a polycarbonate-based resin composition.

Further, an anti-glare layer is sometimes provided to component parts of display surfaces in order to reduce the reflection of natural light to improve visibility of the display. The anti-glare treatment is performed by imparting a fine structure or shape to the surface.

When the display surface has a curved shape, in the case of using a glass plate as a front plate part, it is necessary to bend the glass plate before applying the anti-glare treatment. This is because the anti-glare layer cannot withstand the bending temperature of the glass and disappears. However, it is difficult to uniformly apply the anti-glare treatment to a curved surface. Meanwhile, in the case of using a resin plate, it is possible to bend a flat plate to which the anti-glare treatment is applied in advance. Since the bending temperature of the resin plate is significantly lower than the bending temperature of the glass and the anti-glare layer does not disappear, there is an advantage that it is not necessary to apply the anti-glare treatment to a curved surface.

In many cases, touch panel function is imparted to a display surface of a car navigation system, a smartphone or the like, but when the display surface has a curved shape, it is very difficult to stick a touch sensor to a resin front plate having a curved surface. Accordingly, when employing a method in which a touch sensor is stuck to a flat resin plate before it is formed into a curved shape and then the resin plate and the touch sensor are simultaneously formed, it is not required to stick a touch sensor to a front plate having a curved surface, and the production process has very high productivity.

PRIOR ART DOCUMENTS

PATENT DOCUMENTS

Patent Document 1: Japanese Laid-Open Patent Publication No. 2001-334609
Patent Document 2: Japanese Laid-Open Patent Publication No. 2009-234184
Patent Document 3: Japanese Publication for Opposition No. H04-40183
Patent Document 4: Japanese Laid-Open Patent Publication No. 2010-284910
Patent Document 5: Japanese Laid-Open Patent Publication No. 2009-196153

SUMMARY OF THE INVENTION

PROBLEMS TO BE SOLVED BY THE INVENTION

When the present inventors examined the combination of a resin front plate and a touch sensor, a combination of a resin front plate having a high retardation and a resin film touch sensor having a low retardation was suitable. This is because, in the case of a combination other than that of the above-described retardations, when wearing polarized sunglasses and seeing a car navigation system or smartphone, color unevenness and coloring are caused and visibility is deteriorated.

In the case of a combination other than that of a resin front plate having a high retardation and a resin film touch sensor having a low retardation, when the resin film touch sensor is stuck to the resin front plate in a relationship in which the slow phase axis of the resin front plate is parallel or vertical to the slow phase axis of the resin film touch sensor, color unevenness and coloring are not caused, but there is a high possibility that axes are shifted at the time of forming.

In this regard, the present inventors found that the retardation of the resin front plate having a high retardation is preferably 3500 nm or more, and more preferably 4000 nm, and that the retardation of the resin film touch sensor having a low retardation is preferably 100 nm or less, and more preferably 50 nm or less.

When bending a resin plate, in many cases, the heated resin plate is pressed to be subjected to thermal bending using a metal mold, a wooden mold, a resin mold or the like.

Pursuing a resin sheet or film by which a resin molded body having characteristics more suitable for intended use can be produced is an endless problem.

The present invention aims to provide a resin sheet for molding having high hardness, wherein an abnormal appearance is not easily caused at the time of molding, and wherein color unevenness and coloring are suppressed even at the time of wearing polarized sunglasses, and a resin molded article using the same.

MEANS FOR SOLVING THE PROBLEMS

The present inventors diligently made researches on a resin sheet for molding, which contains a polycarbonate resin as a base material, wherein a hard coat layer is provided on the surface thereof, and a resin film touch sensor to be stuck to the resin sheet. As a result, the present inventors found that a resin sheet having high hardness, wherein an abnormal appearance such as a crack and a flow mark is not easily caused at the time of molding, can be provided by arranging a high hardness resin layer between a polycarbonate resin layer and a hard coat layer and by selecting a polycarbonate resin and a high hardness resin in a manner such that the glass transition points thereof satisfy a predetermined relationship. Moreover, by selecting the retardation of the resin sheet and the retardation of a resin film touch sensor to be stuck to the resin sheet, even after thermal shaping of a resin sheet for molding with a film sensor, color unevenness and coloring at the time of wearing polarized sunglasses can be suppressed. Specifically, the present invention is, for example, as described below.

<1> A resin sheet for molding comprising:

a base material layer containing a polycarbonate resin (a1);
a high hardness resin layer containing a high hardness resin on at least one surface of the base material layer;
a hard coat layer or a hard coat anti-glare layer on a surface of the high hardness resin layer on at least one side, wherein
the glass transition points of the polycarbonate resin (a1) and the high hardness resin satisfy the following

relationship:

-10°C ≤ (the glass transition point of the high hardness resin) - (the glass transition point of the polycarbonate resin (a1)) ≤ 40°C;
the in-plane retardation of the resin sheet as measured at a wavelength of 543 nm is 4,000 nm or more; and a resin film (X) that has an in-plane retardation of 50 nm or less as measured at a wavelength of 543 nm is stuck to one side of the resin sheet by means of an adhesive layer that contains an adhesive.

<2> The resin sheet for molding according to item <1>, wherein the polycarbonate resin (a1) is an aromatic polycarbonate resin.
<3> The resin sheet for molding according to item <2>, wherein the aromatic polycarbonate resin contains a structural unit represented by general formula (4a):

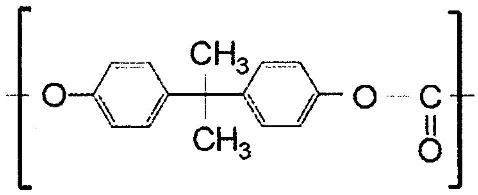
(4a)

<4> The resin sheet for molding according to any one of items <1> to <3>, wherein the content of the polycarbonate resin (a1) is 75 to 100% by mass relative to the total mass of the base material layer.
<5> The resin sheet for molding according to any one of items <1> to <4>, wherein the high hardness resin is selected from the group consisting of Resin (B1) to Resin (B6) below:
Resin (B1): a copolymer containing a (meth)acrylic acid ester structural unit (a) represented by general formula (1) below:

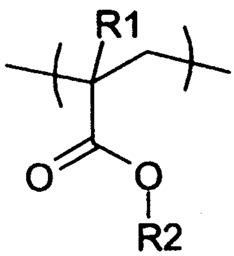
(1)

(wherein R1 represents a hydrogen atom or a methyl group, and R2 represents a $C_1$-$C_{18}$ alkyl group), and an aliphatic vinyl structural unit (b) represented by general formula (2) below:

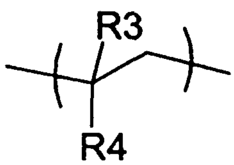
(2)

(wherein R3 represents a hydrogen atom or a methyl group, and R4 is a cyclohexyl group which may be substituted with a $C_1$-$C_4$ hydrocarbon group); or an alloy of the copolymer and Resin (B2);

Resin (B2): a copolymer (D) containing 6 to 77% by mass of a (meth)acrylic acid ester structural unit, 15 to 71% by mass of a styrene structural unit and 8 to 23% by mass of an unsaturated dicarboxylic acid structural unit, or an alloy of the copolymers (D), or an alloy of the copolymer (D) and another high hardness resin, or an alloy of the copolymer (D) and an acrylic resin;
Resin (B3): a copolymer containing a structural unit (c) represented by general formula (6) below:

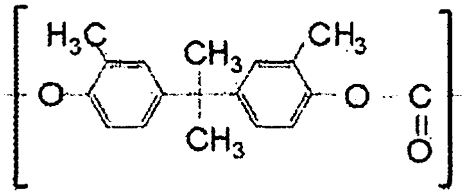

(6)

and optionally a structural unit (d) represented by general formula (7) below:

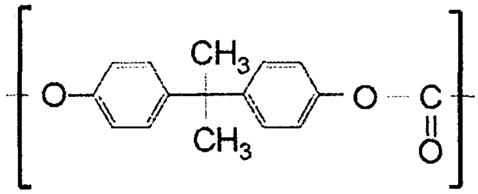

(7);

Resin (B4): a copolymer (G) containing 5 to 20% by mass of a styrene structural unit, 60 to 90% by mass of a (meth)acrylic acid ester structural unit and 5 to 20% by mass of an N-substituted maleimide structural unit, or an alloy of the copolymer (G) and the aforementioned Resin (B2);

Resin (B5): a resin containing a structural unit (e) represented by general formula (8) below:

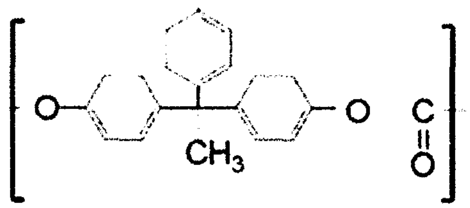

(8);

Resin (B6): an alloy of an acrylic resin and a copolymer containing 50 to 95% by mass of a styrene structural unit and 5 to 50% by mass of an unsaturated dicarboxylic acid unit.

<6> The resin sheet for molding according to any one of items <1> to <5>, wherein the content of the high hardness resin is 70 to 100% by mass relative to the total mass of the high hardness resin layer.

<7> The resin sheet for molding according to any one of items <1> to <6>, wherein the total thickness of the base material layer and the high hardness resin layer is 0.5 mm to 3.5 mm.

<8> The resin sheet for molding according to any one of items <1> to <7>, wherein the ratio of the thickness of the base material layer in the total thickness of the base material layer and the high hardness resin layer is 75% to 99%.

<9> The resin sheet for molding according to any one of items <1> to <8>, which has a haze of 2 to 30%.

<10> The resin sheet for molding according to any one of items <1> to <9>, wherein the pencil hardness of the surface of the hard coat layer of the resin sheet for molding is 2H or harder.

<11> The resin sheet for molding according to any one of items <1> to <10>, wherein the resin film (X) of the resin sheet for molding consists of a polycarbonate film containing the polycarbonate resin (a1).

<12> The resin sheet for molding according to any one of items <1> to <10>, wherein the resin film (X) of the resin sheet for molding consists of a film touch sensor obtained by providing a sensor electrode to a polycarbonate film.

<13> The resin sheet for molding according to any one of items <1> to <12>, wherein the adhesive layer of the resin sheet for molding is an optical adhesive sheet.

<14> A resin molded article obtained by molding with use of the resin sheet for molding according to any one of items <1> to <13>.

ADVANTAGEOUS EFFECT OF THE INVENTION

According to the present invention, it is possible to provide a resin sheet for molding having high hardness, wherein an abnormal appearance is not easily caused at the time of molding, and wherein color unevenness and coloring

are suppressed even at the time of wearing polarized sunglasses, and a resin molded article using the same. In the present invention, since a high hardness resin layer is provided on a base material layer containing a polycarbonate resin and a hard coat layer or hard coat anti-glare layer is further provided thereon, it is possible to provide a resin plate, which is not easily damaged, has anti-glare properties and satisfactory visibility, and is thermally bent easily.

EMBODIMENTS FOR CARRYING OUT THE INVENTION

Hereinafter, the present invention will be described in detail by way of production examples, working examples, etc., but the present invention is not limited thereto and can be arbitrarily changed and then practiced within a range not departing from the gist of the present invention.

The resin sheet for molding of the present invention (hereinafter sometimes referred to as just "resin sheet") comprises: a base material layer that contains a polycarbonate resin (a1); a high hardness resin layer that contains a high hardness resin; and a hard coat layer or hard coat anti-glare layer, and the high hardness resin layer is arranged between the base material layer and the hard coat layer or hard coat anti-glare layer. An additional layer may exist between the base material layer and the high hardness resin layer and between the high hardness resin layer and the hard coat layer or hard coat anti-glare layer, respectively. Examples of the additional layer include, but are not limited to, an adhesive layer and a primer layer. The additional layer is not required to be present. In one embodiment, a resin sheet, which comprises: a base material layer that contains a polycarbonate resin (a1); a high hardness resin layer that is layered on at least one surface of the base material layer; and a hard coat layer or hard coat anti-glare layer that is layered on the high hardness resin layer, is provided.

It is sufficient when the high hardness resin layer and the hard coat layer or hard coat anti-glare layer are provided on at least one side of the base material layer, and the constitution of the other side is not particularly limited. Further, the high hardness resin layer may be provided on both sides of the base material layer, and in this case, the hard coat layer or hard coat anti-glare layer may be provided on one or both of the high hardness resin layers. When the high hardness resin layer is provided on both sides of the base material layer, it is desirable to use the same high hardness resin for the two high hardness resin layers for obtaining a stable resin sheet with little warpage.

The resin sheet for molding of the present invention, which has high hardness, wherein an abnormal appearance such as a crack and a flow mark is not easily caused at the time of molding, can be obtained by providing the high hardness resin layer between the base material layer and the hard coat layer or hard coat anti-glare layer as described above, and by satisfying a predetermined relationship between the glass transition point of the polycarbonate resin (a1) in the base material layer and the glass transition point of the high hardness resin in the high hardness resin layer. In particular, an abnormal appearance is not easily caused at the time of thermoforming, and since it is possible to set wide ranges of conditions for thermoforming (temperature, heating time, etc.), it can be said that such a resin sheet is suitable for thermoforming. Further, by sticking a resin film touch sensor in advance to the resin sheet suitable for thermoforming before molding, a difficult step of sticking a touch sensor to a front plate having a curved surface after molding can be omitted. Therefore, the productivity of display front plates having a curved surface can be improved.

A resin sheet having a hard coat layer or a hard coat anti-glare layer having high hardness on its surface like the present invention, particularly one in which a polycarbonate resin is used as a base material, has more excellent impact resistance, higher safety and a less weight when compared to an ordinary glass plate. In addition, it is more easily bent when compared to the ordinary glass plate, and it is not broken when it is bent a little. It is considered that this is because the hard coat layer or the hard coat anti-glare layer of the resin sheet has flexibility to some extent.

By providing the high hardness resin layer between the base material layer and the hard coat anti-glare layer, the hardness of the resin sheet can be further increased. When the hard coat anti-glare layer is provided directly on the polycarbonate resin layer, problems including a low elastic modulus and easiness of buckling may be caused, but by providing the high hardness resin layer, such problems can be solved.

In the present invention, the glass transition point of the polycarbonate resin (a1) in the base material layer and the glass transition point of the high hardness resin in the high hardness resin layer satisfy the relational expression:

$$-10^\circ C \leq (\text{glass transition point of high hardness resin}) - (\text{glass transition point of polycarbonate resin (a1)}) \leq 40^\circ C$$

Conventionally, when different types of resin layers are layered and a hard coat layer is provided thereon, glass transition points (Tg) and melt viscosities of resins contained in respective layers differ from each other, and there is a problem of difficulty in thermoforming without defects such as a crack. However, according to the present invention, by using the polycarbonate resin (a1) and the high hardness resin that satisfy the above-described relational expression, the above-described problem can also be solved.

Usually, when thermoforming a resin sheet having a multilayer structure into a desired shape, thermoforming

is performed at a molding temperature of a resin whose amount in the layers is the largest. For example, in the case of a resin sheet in which a polycarbonate resin is used as a base material layer, since the amount of the polycarbonate resin that has satisfactory impact resistance is usually the largest, thermoforming is performed at a molding temperature of the polycarbonate resin. Since the polycarbonate resin (a1) and the high hardness resin that satisfy the above-described relational expression are used for the resin sheet of the present invention, even when thermoforming is performed at a molding temperature suitable for the polycarbonate resin, the problem of abnormal appearance is not easily caused. Accordingly, it can be said that the resin sheet of the present invention is more suitable for thermoforming when compared to conventional ones.

The glass transition points of the polycarbonate resin (a1) and the high hardness resin preferably satisfy the relational expression: -5°C ≤ (glass transition point of high hardness resin) - (glass transition point of polycarbonate resin (a1)) ≤ 30°C, and more preferably satisfy the relational expression: 0°C ≤ (glass transition point of high hardness resin) - (glass transition point of polycarbonate resin (a1)) ≤ 30°C. When Tg of the high hardness resin is extremely lower than Tg of the polycarbonate resin (a1), the high hardness resin is in a rubbery state or molten state at the time of thermoforming and is easily moved. In this case, the hard coat anti-glare layer, which has a highly crosslinked structure and is still hard even when it is heated, cannot follow the movement of the high hardness resin that has become easily movable, and a crack is easily generated. Meanwhile, when Tg of the high hardness resin is too much higher than Tg of the polycarbonate resin (a1), the difference between the viscosity of the high hardness resin and the viscosity of the polycarbonate resin becomes larger, and when these resins are layered, the interface becomes rough and a flow mark may be generated.

The resin sheet of the present invention can be suitably used for the production of a molded article having a curved shape that requires hardness. For example, since a component part having a curved portion that is continuous with a plane portion can be successfully produced, it is also possible to provide a product having a novel design or function.

When molded articles having the above-described shape are produced using conventional resin sheets, many defects such as a crack are generated at the time of thermoforming such as hot press molding, vacuum forming, pressure forming and TOM molding. For this reason, it is required to devise a method in which, for example, the hardness of a hard coat is reduced, in order to suppress the generation of a crack at the time of thermoforming. However, when the hardness of the hard coat is reduced, though thermoformability is improved, new problems such as easiness of damaging and reduction in chemical resistance are caused because the hard coat is soft.

Meanwhile, according to the present invention, since the generation of a crack is suppressed as described above, a resin sheet that can be thermoformed can be provided without reducing the hardness of a hard coat. The resin sheet of the present invention is not easily damaged and has high chemical resistance since a hard coat anti-glare layer that is hard can be provided as the surface layer. Utilizing these characteristics, the resin sheet of the present invention can be used for component parts of display surfaces of personal computers, mobile phones and the like, exterior and interior members of automobiles, cases and front plates having a curved surface in mobile phone terminals, personal computers, tablet PCs, car navigation systems and the like, etc.

Hereinafter, respective components of the resin sheet according to the present invention will be described.

1. Base material layer

The base material layer is a resin layer mainly composed of the polycarbonate resin (a1). The polycarbonate resin (a1) contained in the base material layer may consist of one material or two or more materials. The content of the polycarbonate resin (a1) in the base material layer is preferably 75 to 100% by mass, more preferably 90 to 100% by mass, and particularly preferably 100% by mass relative to the total mass of the base material layer. By increasing the content of the polycarbonate resin, impact resistance is improved.

The polycarbonate resin (a1) is not particularly limited as long as it contains a carbonate bond, i.e., a -[O-R-OCO]- unit (wherein R may include an aliphatic group, an aromatic group, or both of the aliphatic group and the aromatic group, and it may have a linear structure or a branched structure) in the main chain of the molecule. However, it is preferably an aromatic polycarbonate resin, and it is particularly preferred to use a polycarbonate resin containing a structural unit of formula (4a) below. By using such a polycarbonate resin, a resin sheet having more excellent impact resistance can be obtained.

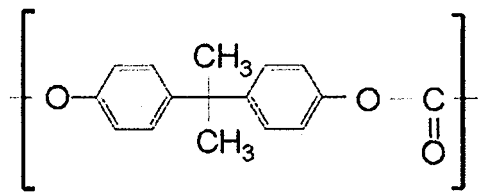

(4a)

Specifically, as the polycarbonate resin (a1), an aromatic polycarbonate resin (e.g., Iupilon S-2000, Iupilon S-1000 and Iupilon E-2000; manufactured by Mitsubishi Engineering-Plastics Corporation), etc. can be used.

Recently, for the purpose of controlling the glass transition point of a polycarbonate resin, a polycarbonate resin to which a monovalent phenol represented by general formula (4) below as an end terminator is added is used. Similarly, in the present invention, a polycarbonate resin to which an end terminator is added can be used.

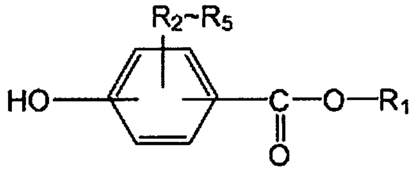

(4)

(In the formula, $R_1$ represents a $C_{8-36}$ alkyl group or a $C_{8-36}$ alkenyl group; $R_2$ to $R_5$ each independently represent a hydrogen atom, halogen, or a $C_{1-20}$ alkyl group or $C_{6-12}$ aryl group which may have a substituent; and in this regard, the substituent is halogen, a $C_{1-20}$ alkyl group or a $C_{6-12}$ aryl group.)

In this specification, the "alkyl group" and the "alkenyl group" may be linear or branched and may have a substituent.

More preferably, the monovalent phenol represented by general formula (4) is represented by general formula (5) below:

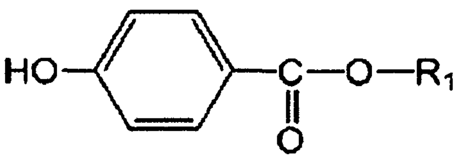

(5)

(In the formula, $R_1$ represents a $C_{8-36}$ alkyl group or a $C_{8-36}$ alkenyl group.)

The carbon number of $R_1$ in general formula (4) or general formula (5) is more preferably within a specific numerical range. Specifically, the upper limit of the carbon number of $R_1$ is preferably 36, more preferably 22, and particularly preferably 18. Further, the lower limit of the carbon number of $R_1$ is preferably 8, and more preferably 12.

Among monovalent phenols represented by general formula (4) or general formula (5), it is particularly preferred to use one or both of p-hydroxybenzoic acid hexadecyl ester and p-hydroxybenzoic acid 2-hexyldecyl ester as the end terminator.

For example, when using a monovalent phenol represented by general formula (5), wherein $R_1$ is a $C_{16}$ alkyl group, as the end terminator, it is possible to obtain a polycarbonate resin excellent in the glass transition temperature, melt flowability, moldability, drawdown resistance, etc., and it is particularly preferred because the solvent solubility of the monovalent phenol at the time of the production of the polycarbonate resin is also excellent.

Meanwhile, when the carbon number of $R_1$ in general formula (4) or general formula (5) is increased too much, the organic solvent solubility of the monovalent phenol (end terminator) tends to be reduced, and the productivity at the time of the production of the polycarbonate resin may be reduced.

For example, when the carbon number of $R_1$ is 36 or less, the productivity at the time of the production of the polycarbonate resin is high, and economic efficiency is satisfactory. When the carbon number of $R_1$ is 22 or less, the monovalent phenol is particularly excellent in organic solvent solubility, the productivity at the time of the production of the polycarbonate resin is very high, and economic efficiency is improved. Examples of polycarbonate resins in which such a monovalent phenol is used include Iupizeta T-1380 (manufactured by Mitsubishi Gas Chemical Company, Inc.).

When the carbon number of $R_1$ in general formula (4) or general formula (5) is too small, the glass transition point of the polycarbonate resin is not sufficiently low, and thermoformability may be reduced.

In the present invention, the weight average molecular weight of the polycarbonate resin (a1) may affect impact resistance and molding conditions of the resin sheet. Specifically, when the weight average molecular weight is too low, impact resistance of the resin sheet may be reduced. When the weight average molecular weight is too high, an excessive heat source may be required at the time of forming the base material layer containing the polycarbonate resin (a1). Further, since high temperatures may be required depending on the molding method to be selected, the polycarbonate resin (a1) may be exposed to high temperatures, and it may adversely affect thermal stability thereof. The weight average molecular weight of the polycarbonate resin (a1) is preferably 15,000 to 75,000, more preferably 20,000 to 70,000, and even more preferably 20,000 to 65,000. In this specification, the weight average molecular weight is a standard polystyrene equivalent weight average molecular weight measured by gel permeation chromatography (GPC).

Those skilled in the art can suitably select and use the polycarbonate resin (a1), which has a glass transition point (Tg) satisfying the above-described relational expression, among publicly-known polycarbonate resins in consideration of Tg of the high hardness resin to be used. Tg of the polycarbonate resin (a1) is preferably 90 to 190°C, more preferably 100 to 170°C, and particularly preferably 110 to 150°C. In this specification, the glass transition point is a temperature obtained by carrying out the measurement using a differential scanning calorimeter and 10 mg of a sample at a temperature raising rate of 10°C/min and calculation according to a midpoint method.

The base material layer may contain another resin in addition to the polycarbonate resin (a1). Examples of said another resin include a polyester resin. It is preferred that the polyester resin mainly contains terephthalic acid as a dicarboxylic acid component, and a dicarboxylic acid component other than terephthalic acid may also be contained in the polyester resin.

For example, a polyester resin obtained by polycondensation of a glycol component containing 80 to 60 mol% of ethylene glycol that is the main component and 20 to 40 mol% of 1,4-cyclohexanedimethanol (100 mol% in total) (so-called "PETG") is preferred. It is preferred that the resin contained in the base material layer is only the polycarbonate resin (a1). When another resin is contained, the amount thereof is preferably 0 to 25% by mass, and more preferably 0 to 10% by mass relative to the total mass of the base material layer.

The base material layer may further contain an additive, etc. Additives usually used for resin sheets can be used, and examples of such additives include an antioxidant, an anti-coloring agent, an antistatic agent, a mold release agent, a lubricant, a dye, a pigment, a plasticizer, a flame retardant, a resin modifier, a compatibilizer, and a reinforcing material such as an organic filler and an inorganic filler. The method for mixing the additive and the resin is not particularly limited, and it is possible to use a method of compounding the total amount, a method of dry-blending a master batch, a method of dry-blending the total amount or the like. The amount of the additive is preferably 0 to 10% by mass, more preferably 0 to 7% by mass, and particularly preferably 0 to 5% by mass relative to the total mass of the base material layer.

The thickness of the base material layer is preferably 0.3 to 10 mm, more preferably 0.3 to 5 mm, and particularly preferably 0.3 to 3.5 mm.

2. High hardness resin layer

The high hardness resin layer is a resin layer mainly composed of a high hardness resin. In this specification, the high hardness resin means a resin having hardness higher than that of the polycarbonate resin serving as the base material and having a pencil hardness of HB or harder. The pencil hardness of the high hardness resin is preferably HB to 3H, more preferably H to 3H, and particularly preferably 2H to 3H. The high hardness resin contained in the high hardness resin layer may consist of one material or two or more materials. Those skilled in the art can suitably select and use the high hardness resin, which has a glass transition point (Tg) satisfying the relational expression: "-10°C ≤ (glass transition point of high hardness resin) - (glass transition point of polycarbonate resin (a1)) ≤ 40°C", among publicly-known high hardness resins in consideration of Tg of the polycarbonate resin to be used. The high hardness resin is preferably selected from at least one of Resin (B1) to Resin (B6) described below.

<Resin (B1)>

Resin (B1) is a copolymer containing a (meth)acrylic acid ester structural unit (a) represented by general formula (1) below and an aliphatic vinyl structural unit (b) represented by general formula (2) below; or an alloy of the copolymer and Resin (B2) described below.

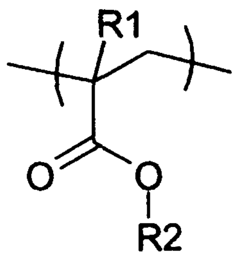

(1)

(In the formula, R1 represents a hydrogen atom or a methyl group, and R2 represents a $C_1$-$C_{18}$ alkyl group.)

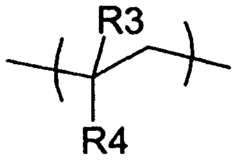

(2)

(In the formula, R3 represents a hydrogen atom or a methyl group, and R4 is a cyclohexyl group which may be substituted with a $C_1$-$C_4$ hydrocarbon group.)

In this specification, the "hydrocarbon group" may be linear, branched or cyclic and may have a substituent.

In the (meth)acrylic acid ester structural unit (a) represented by general formula (1), R2 is a $C_{1-18}$ alkyl group, preferably a $C_{1-10}$ alkyl group, and more preferably a $C_{1-6}$ alkyl group. Specific examples thereof include a methyl group, an ethyl group, a butyl group, a lauryl group, a stearyl group, a cyclohexyl group and an isobornyl group.

The (meth)acrylic acid ester structural unit (a) is preferably a (meth)acrylic acid ester structural unit in which R2 is a methyl group or an ethyl group, and more preferably a methyl methacrylate structural unit in which R1 is a methyl group and R2 is a methyl group.

In the aliphatic vinyl structural unit (b) represented by general formula (2), R3 is a hydrogen atom or a methyl group, and more preferably a hydrogen atom. R4 is a cyclohexyl group or a cyclohexyl group substituted with a $C_1$-$C_4$ hydrocarbon group, and preferably a cyclohexyl group not having a substituent.

Accordingly, the aliphatic vinyl structural unit (b) is more preferably an aliphatic vinyl structural unit in which R3 is a hydrogen atom and R4 is a cyclohexyl group.

Resin (B1) may contain one or two or more types of the (meth)acrylic acid ester structural units (a), and may contain one or two or more types of the aliphatic vinyl structural units (b).

The total content of the (meth)acrylic acid ester structural unit (a) and the aliphatic vinyl structural unit (b) is preferably 90 to 100 mol%, more preferably 95 to 100 mol%, and particularly preferably 98 to 100 mol% relative to all the structural units in Resin (B1).

That is, Resin (B1) may contain a structural unit other than the (meth)acrylic acid ester structural unit (a) and the aliphatic vinyl structural unit (b). The amount thereof is preferably 10 mol% or less, more preferably 5 mol% or less, and particularly preferably 2 mol% or less relative to all the structural units in Resin (B1).

Examples of the structural unit other than the (meth)acrylic acid ester structural unit (a) and the aliphatic vinyl structural unit (b) include a structural unit derived from an aromatic vinyl monomer including a nonhydrogenated aromatic double bond, which is generated in the process of the production of Resin (B1), wherein: a (meth)acrylic acid ester monomer and an aromatic vinyl monomer are polymerized; and then an aromatic double bond derived from the aromatic vinyl monomer is hydrogenated.

Further, the content of the (meth)acrylic acid ester structural unit (a) represented by general formula (1) is preferably 65 to 80 mol%, and more preferably 70 to 80 mol% relative to all the structural units in Resin (B1). When the ratio of the (meth)acrylic acid ester structural unit (a) relative to all the structural units in Resin (B1) is 65 mol% or more, it is possible to obtain a resin layer excellent in adhesion to the base material layer and surface hardness. When the ratio is 80 mol% or less, warpage caused by water absorption of the resin sheet does not easily occur.

The content of the aliphatic vinyl structural unit (b) represented by general formula (2) is preferably 20 to 35 mol%, and more preferably 20 to 30 mol% relative to all the structural units in Resin (B1). When the content of the aliphatic vinyl structural unit (b) is 20 mol% or more, warpage under high-temperature and high-humidity conditions can be prevented, and when the content is 35 mol% or less, detachment from the base material layer at the interface can be prevented.

In this specification, the "copolymer" may have a structure of either a random copolymer, block copolymer or alternating copolymer.

The method for producing Resin (B1) is not particularly limited, but it is preferably obtained by polymerizing at least one (meth)acrylic acid ester monomer and at least one aromatic vinyl monomer, followed by hydrogenating an aromatic double bond derived from the aromatic vinyl monomer. Note that (meth)acrylic acid indicates methacrylic acid and/or acrylic acid.

Specific examples of the aromatic vinyl monomer to be used in this process include styrene, $\alpha$-methylstyrene, p-hydroxystyrene, alkoxystyrene, chlorostyrene, and derivatives thereof. Among them, styrene is preferred.

For polymerizing the (meth)acrylic acid ester monomer and the aromatic vinyl monomer, a publicly-known method can be used, and for example, the production can be carried out according to a bulk polymerization method, a solution polymerization method or the like.

The bulk polymerization method is carried out, for example, by a method of continuously supplying a monomer composition containing the above-described monomers and a polymerization initiator to a complete mixing tank to perform continuous polymerization at 100 to 180°C. The above-described monomer composition may contain a chain

transfer agent according to need.

The polymerization initiator is not particularly limited, and examples thereof include organic peroxides such as t-amyl peroxy-2-ethylhexanoate, t-butyl peroxy-2-ethylhexanoate, benzoyl peroxide, 1,1-di(t-hexylperoxy)-3,3,5-trimethylcyclohexane, 1,1-di(t-hexylperoxy)cyclohexane, 1,1-di(t-butylperoxy)cyclohexane, t-hexyl propoxyisopropyl monocarbonate, t-amyl peroxy-n-octoate, t-butyl peroxyisopropyl monocarbonate and di-t-butyl peroxide, and azo compounds such as 2,2'-azobisisobutyronitrile, 2,2'-azobis(2-methylbutyronitrile) and 2,2'-azobis(2,4-dimethylvaleronitrile). These substances may be used solely, or two or more of them may be used in combination.

The chain transfer agent may be used according to need, and examples thereof include $\alpha$-methylstyrene dimer.

Examples of the solvent to be used in the solution polymerization method include hydrocarbon-based solvents such as toluene, xylene, cyclohexane and methylcyclohexane, ester-based solvents such as ethyl acetate and methyl isobutyrate, ketone-based solvents such as acetone and methyl ethyl ketone, ether-based solvents such as tetrahydrofuran and dioxane, and alcohol-based solvents such as methanol and isopropanol.

The solvent to be used in the hydrogenation reaction after the polymerization of the (meth)acrylic acid ester monomer and the aromatic vinyl monomer may be the same as or different from the above-described polymerization solvent. Examples thereof include hydrocarbon-based solvents such as cyclohexane and methylcyclohexane, ester-based solvents such as ethyl acetate and methyl isobutyrate, ketone-based solvents such as acetone and methyl ethyl ketone, ether-based solvents such as tetrahydrofuran and dioxane, and alcohol-based solvents such as methanol and isopropanol.

After the (meth)acrylic acid ester monomer and the aromatic vinyl monomer are polymerized in the above-described manner, the aromatic double bond derived from the aromatic vinyl monomer is hydrogenated, thereby obtaining Resin (B1) to be used in the present invention.

The method for hydrogenation is not particularly limited, and a publicly-known method can be used. For example, hydrogenation can be performed at a hydrogen pressure of 3 to 30 MPa and a reaction temperature of 60 to 250°C by means of a batch type or continuous flow-type reaction. When the temperature is 60°C or higher, the reaction time is not too long, and when the temperature is 250°C or lower, cut of a molecular chain and hydrogenation of an ester moiety are rarely caused.

Examples of the catalyst to be used in hydrogenation reaction include a solid catalyst in which a metal such as nickel, palladium, platinum, cobalt, ruthenium and rhodium, or an oxide, salt or complex of the metal is carried by a porous carrier such as carbon, alumina, silica, silica-alumina and diatomaceous earth.

Resin (B1) is preferably one in which 70% or more of the aromatic double bond derived from the aromatic vinyl monomer is hydrogenated. In other words, the rate of nonhydrogenation of the aromatic double bond included in the structural unit derived from the aromatic vinyl monomer is preferably less than 30%. By adjusting the rate of nonhydrogenation to less than 30%, a resin having excellent transparency can be obtained. The rate of nonhydrogenation is more preferably less than 10%, and even more preferably less than 5%.

The weight average molecular weight of Resin (B1) is not particularly limited, but it is preferably 50,000 to 400,000, and more preferably 70,000 to 300,000 from the viewpoint of strength and moldability.

The glass transition point of Resin (B1) is preferably 110 to 140°C, more preferably 110 to 135°C, and particularly preferably 110 to 130°C. When the glass transition point is 110°C or higher, deformation and cracking of the resin sheet provided by the present invention rarely occur under a heat environment or wet heat environment. Meanwhile, when the glass transition point is 140°C or lower, excellent processability is obtained when molding is performed by means of continuous type thermal shaping using a mirror surface roll or shaping roll or batch type thermal shaping using a mirror surface mold or shaping mold.

Specific examples of Resin (B1) include Optimas 7500 and 6000 (manufactured by Mitsubishi Gas Chemical Company, Inc.).

When using Resin (B1) as the high hardness resin, Iupizeta T-1380 (manufactured by Mitsubishi Gas Chemical Company, Inc.) is preferably used as the polycarbonate resin (a1). It is particularly preferred to employ an embodiment in which: a copolymer that contains 75 mol% of a structural unit represented by general formula (1) (both R1 and R2 are a methyl group; methyl methacrylate) and 25 mol% of a structural unit represented by general formula (2) (R3 is a hydrogen atom, and R4 is a cyclohexyl group) is used as Resin (B1); a polycarbonate resin containing a structural unit represented by general formula (4a) is used as the polycarbonate resin (a1); and a monovalent phenol represented by general formula (5) (the carbon number of R1 is 8 to 22) is used as the end terminator.

<Resin (B2)>

Resin (B2) is: a copolymer (D) containing 6 to 77% by mass of a (meth)acrylic acid ester structural unit, 15 to 71% by mass of a styrene structural unit and 8 to 23% by mass of an unsaturated dicarboxylic acid structural unit; or a resin that is an alloy of the copolymers (D); or a resin that is an alloy of the copolymer (D) and a high hardness resin other than Resin (B2); or a resin that is an alloy of the copolymer (D) and an acrylic resin. Examples of the high hardness

resin other than Resin (B2) include a methyl methacrylate-styrene copolymer and an acrylonitrile-butadiene-styrene copolymer. Examples of the acrylic resin include polymethyl methacrylate and a copolymer of methyl methacrylate and methyl acrylate or ethyl acrylate. Further, it is also possible to use a commercially-available product, and specific examples thereof include ACRYPET manufactured by Mitsubishi Chemical Corporation, SUMIPEX manufactured by Sumitomo Chemical Co., Ltd., PARAPET manufactured by Kuraray Co., Ltd., and ALTUGLAS manufactured by Arkema S.A. When an alloy is employed, in order to avoid reduction in Tg of the high hardness resin, an alloy of resins having higher Tgs is preferably employed.

Examples of the (meth)acrylic acid ester monomer constituting the (meth)acrylic acid ester structural unit include acrylic acid, methyl acrylate, ethyl acrylate, n-butyl acrylate, 2ethylhexyl acrylate, methacrylic acid, methyl methacrylate, ethyl methacrylate, n-butyl methacrylate and 2ethylhexyl methacrylate, and methyl methacrylate is particularly preferred. Two or more of these (meth)acrylic acid ester monomers may be used as a mixture.

The content of the (meth)acrylic acid ester structural unit is 6 to 77% by mass, and preferably 20 to 70% by mass relative to the total mass of Resin (B2).

The styrene structural unit is not particularly limited, and any publicly-known styrene-based monomer can be used. From the viewpoint of availability, styrene, $\alpha$-methylstyrene, o-methylstyrene, m-methylstyrene, p-methylstyrene, t-butylstyrene, etc. are preferred. Among them, styrene is particularly preferred from the viewpoint of compatibility. Two or more of these styrene-based monomers may be used as a mixture.

The content of the styrene structural unit is 15 to 71% by mass, and preferably 20 to 66% by mass relative to the total mass of Resin (B2).

Examples of an unsaturated dicarboxylic acid anhydride monomer constituting the unsaturated dicarboxylic acid structural unit include acid anhydrides of maleic acid, itaconic acid, citraconic acid, aconitic acid, etc. From the viewpoint of compatibility with the styrene-based monomer, maleic anhydride is preferred. Two or more of these unsaturated dicarboxylic acid anhydride monomers may be used as a mixture.

The content of the unsaturated dicarboxylic acid structural unit is 8 to 23% by mass, and preferably 10 to 23% by mass relative to the total mass of Resin (B2).

The total content of the (meth)acrylic acid ester structural unit, the styrene structural unit and the unsaturated dicarboxylic acid structural unit is preferably 90 to 100 mol%, more preferably 95 to 100 mol%, and particularly preferably 98 to 100 mol% relative to all the structural units in Resin (B2).

That is, Resin (B2) may contain a structural unit other than the (meth)acrylic acid ester structural unit, the styrene structural unit and the unsaturated dicarboxylic acid structural unit. The amount thereof is preferably 10 mol% or less, more preferably 5 mol% or less, and particularly preferably 2 mol% or less relative to all the structural units in Resin (B2).

Examples of the structural unit other than those include N-phenylmaleimide.

The method for producing Resin (B2) is not particularly limited, and examples thereof include a bulk polymerization method and a solution polymerization method.

Specific examples of Resin (B2) include RESISFY R100, R200 and R310 (manufactured by Denka), DELPET 980N (manufactured by Asahi Kasei Chemicals Corporation) and hw55 (manufactured by Daicel-Evonik Ltd.).

The weight average molecular weight of Resin (B2) is not particularly limited, but it is preferably 50,000 to 300,000, and more preferably 80,000 to 200,000.

The glass transition point of Resin (B2) is preferably 90 to 150°C, more preferably 100 to 150°C, and particularly preferably 115 to 150°C.

When using Resin (B2) as the high hardness resin, it is preferred to employ an embodiment in which a polycarbonate resin containing a structural unit represented by general formula (4a) is used as the polycarbonate resin (a1). In addition, it is particularly preferred to employ an embodiment in which a monovalent phenol represented by general formula (5) (the carbon number of R1 is 8 to 22) is used as the end terminator. Examples of such polycarbonate resins include Iupizeta T-1380 (manufactured by Mitsubishi Gas Chemical Company, Inc.) and Iupilon E-2000 (manufactured by Mitsubishi Engineering-Plastics Corporation). It is preferred to employ an embodiment in which: a copolymer consisting of 6 to 26% by mass of a methyl methacrylate structural unit, 55 to 21% by mass of a styrene structural unit and 15 to 23% by mass of a maleic anhydride structural unit (R100, R200 or R310; manufactured by Denka) is used as Resin (B2); and Iupizeta T-1380 is used as the polycarbonate resin (a1). Further, it is particularly preferred to employ an embodiment in which: a copolymer consisting of 6% by mass of a methyl methacrylate structural unit, 71% by mass of styrene structural unit and 23% by mass of maleic anhydride structural unit (R310; manufactured by Denka) is used as Resin (B2); and Iupizeta T-1380 is used as the polycarbonate resin (a1).

<Resin (B3)>

Resin (B3) is a copolymer containing a structural unit (c) represented by general formula (6) below and optionally a structural unit (d) represented by general formula (7) below. The structural unit (d) may be present or absent in Resin

(B3), but it is preferred that Resin (B3) contains the structural unit (d).

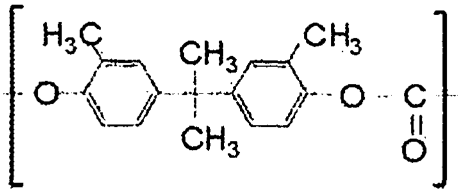

(6)

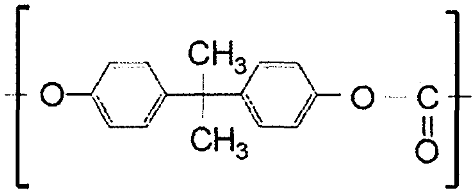

(7)

The ratio of the structural unit (c) in all the structural units in Resin (B3) is preferably 50 to 100 mol%, more preferably 60 to 100 mol%, and particularly preferably 70 to 100 mol%. The ratio of the structural unit (d) in all the structural units in Resin (B3) is preferably 0 to 50 mol%, more preferably 0 to 40 mol%, and particularly preferably 0 to 30 mol%.

The total content of the structural unit (c) and the structural unit (d) is preferably 90 to 100 mol%, more preferably 95 to 100 mol%, and particularly preferably 98 to 100 mol% relative to Resin (B3).

Resin (B3) may contain a structural unit other than the structural unit (c) and the structural unit (d). When the structural unit other than those is contained, the amount thereof is preferably 10 mol% or less, more preferably 5 mol% or less, and particularly preferably 2 mol% or less relative to all the structural units in Resin (B3).

Examples of the structural unit other than those include a structural unit represented by general formula (4a) below.

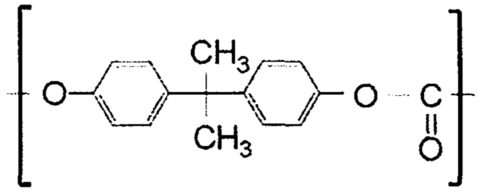

(4a)

The method for producing Resin (B3) is not particularly limited, but it can be produced by a method similar to the above-described method for producing the polycarbonate resin (a1), except that bisphenol C is used as a monomer.

Specific examples of Resin (B3) include Iupilon KH3410UR, KH3520UR and KS3410UR (manufactured by Mitsubishi Engineering-Plastics Corporation).

The weight average molecular weight of Resin (B3) is preferably 15,000 to 75,000, more preferably 20,000 to 70,000, and particularly preferably 25,000 to 65,000.

The glass transition point of Resin (B3) is preferably 105 to 150°C, more preferably 110 to 140°C, and particularly preferably 110 to 135°C.

When using Resin (B3) as the high hardness resin, it is preferred to employ an embodiment in which a polycarbonate resin containing a structural unit represented by general formula (4a) is used as the polycarbonate resin (a1). In addition, it is particularly preferred to employ an embodiment in which a monovalent phenol represented by general formula (5) (the carbon number of R1 is 8 to 22) is used as the end terminator. Examples of such polycarbonate resins include Iupizeta T-1380 (manufactured by Mitsubishi Gas Chemical Company, Inc.). It is particularly preferred to use Iupilon KS3410UR (manufactured by Mitsubishi Engineering-Plastics Corporation) as Resin (B3) and Iupizeta T-1380 (manufactured by Mitsubishi Gas Chemical Company, Inc.) as the polycarbonate resin (a1).

When using Resin (B3) as the high hardness resin, as another resin to be contained in the high hardness resin layer, a resin that does not contain the structural unit (c) and contains the structural unit (d) is preferred, and a resin consisting of only the structural unit (d) is more preferred. Specifically, an aromatic polycarbonate resin (e.g., Iupilon S-2000, Iupilon S-1000 and Iupilon E-2000; manufactured by Mitsubishi Engineering-Plastics Corporation), etc. can be

used. When said another resin is contained, the ratio of Resin (B3) is preferably 45% by mass of more, and more preferably 55% by mass or more relative to all resins contained in the high hardness resin layer.

<Resin (B4)>

Resin (B4) is a copolymer (G) containing 5 to 20% by mass of a styrene structural unit, 60 to 90% by mass of a (meth)acrylic acid ester structural unit and 5 to 20% by mass of an N-substituted maleimide structural unit, or an alloy of the copolymer (G) and the above-described Resin (B2). When an alloy is employed, in order to avoid reduction in Tg of the high hardness resin layer, an alloy of resins having higher Tgs is preferably employed.

The styrene structural unit is not particularly limited, and any publicly-known styrene-based monomer can be used. From the viewpoint of availability, styrene, α-methylstyrene, o-methylstyrene, m-methylstyrene, p-methylstyrene, t-butylstyrene, etc. are preferred. Among them, styrene is particularly preferred from the viewpoint of compatibility. The copolymer (G) may contain two or more of these styrene structural units. The content of the styrene structural unit is 5 to 20% by mass, preferably 5 to 15% by mass, and more preferably 5 to 10% by mass relative to the total mass of Resin (B4).

Examples of the (meth)acrylic acid ester structural unit include structural units derived from acrylic acid, methyl acrylate, ethyl acrylate, n-butyl acrylate, 2ethylhexyl acrylate, methacrylic acid, methyl methacrylate, ethyl methacrylate, n-butyl methacrylate, 2ethylhexyl methacrylate or the like, and a structural unit derived from methyl methacrylate is particularly preferred. Further, the copolymer (G) may contain two or more of these (meth)acrylic acid ester structural units. The content of the (meth)acrylic acid ester structural unit is 60 to 90% by mass, preferably 70 to 90% by mass, and more preferably 80 to 90% by mass relative to the total mass of Resin (B4).

Examples of the N-substituted maleimide structural unit in Resin (B4) include structural units derived from N-arylmaleimide such as N-phenylmaleimide, N-chlorophenylmaleimide, N-methylphenylmaleimide, N-naphthylmaleimide, N-hydroxyphenylmaleimide, N-methoxyphenylmaleimide, N-carboxyphenylmaleimide, N-nitrophenylmaleimide and N-tribromophenylmaleimide or the like. From the viewpoint of compatibility with the acrylic resin, a structural unit derived from N-phenylmaleimide is preferred. The copolymer (G) may contain two or more of these N-substituted maleimide structural units. The content of the N-substituted maleimide structural unit is 5 to 20% by mass, preferably 5 to 15% by mass, and more preferably 5 to 10% by mass relative to the total mass of Resin (B4).

The total content of the styrene structural unit, the (meth)acrylic acid ester structural unit and the N-substituted maleimide structural unit is preferably 90 to 100 mol%, more preferably 95 to 100 mol%, and particularly preferably 98 to 100 mol% relative to Resin (B4).

Resin (B4) may contain a structural unit other than the above-described structural units. When the structural unit other than those is contained, the amount thereof is preferably 10 mol% or less, more preferably 5 mol% or less, and particularly preferably 2 mol% or less relative to all the structural units in Resin (B4).

Examples of the structural unit other than those include a structural unit derived from general formula (1) below and a structural unit derived from general formula (2) below.

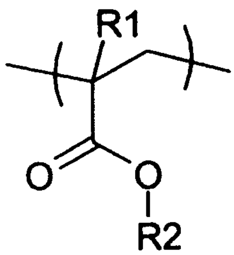

(1)

(In the formula, R1 represents a hydrogen atom or a methyl group; and R2 represents a $C_1$-$C_{18}$ alkyl group.)

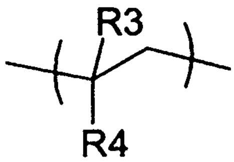

(2)

(In the formula, R3 represents a hydrogen atom or a methyl group; and R4 is a cyclohexyl group which may be substituted with a $C_1$-$C_4$ hydrocarbon group.)

The method for producing Resin (B4) is not particularly limited, and it can be produced by means of solution polymerization, bulk polymerization or the like.

Specific examples of Resin (B4) include DELPET PM120N (manufactured by Asahi Kasei Chemicals Corporation).

The weight average molecular weight of Resin (B4) is preferably 50,000 to 250,000, and more preferably 100,000 to 200,000.

The glass transition point of Resin (B4) is preferably 110 to 150°C, more preferably 115 to 140°C, and particularly preferably 115 to 135°C.

When using Resin (B4) as the high hardness resin, it is preferred to employ an embodiment in which a polycarbonate resin containing a structural unit represented by general formula (4a) is used as the polycarbonate resin (a1). In addition, it is particularly preferred to employ an embodiment in which a monovalent phenol represented by general formula (5) (the carbon number of R1 is 8 to 22) is used as the end terminator. Examples of such polycarbonate resins include Iupizeta T-1380 (manufactured by Mitsubishi Gas Chemical Company, Inc.). It is particularly preferred to use DELPET PM-120N that consists of 7% by mass of a styrene structural unit, 86% by mass of a (meth)acrylic acid ester structural unit and 7% by mass of a N-substituted maleimide structural unit as Resin (B4) and Iupizeta T-1380 as the polycarbonate resin (a1).

<Resin (B5)>

Resin (B5) is a resin containing a structural unit (e) represented by general formula (8) below.

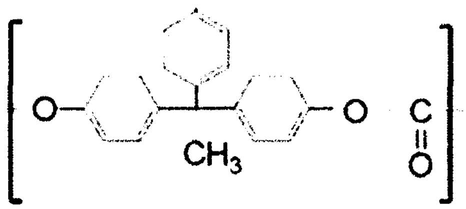

(8)

The ratio of the structural unit (e) in all the structural units in Resin (B5) is preferably 80 to 100 mol%, more preferably 90 to 100 mol%, and particularly preferably 95 to 100 mol%.

Resin (B5) may contain a structural unit other than the structural unit (e), but is preferably a polycarbonate resin consisting of the structural unit (e). When the structural unit other than that is contained, the amount thereof is preferably 20 mol% or less, more preferably 10 mol% or less, and particularly preferably 5 mol% or less relative to all the structural units in Resin (B5).

Examples of the structural unit other than that include a structural unit represented by general formula (6) below and a structural unit represented by general formula (7) below.

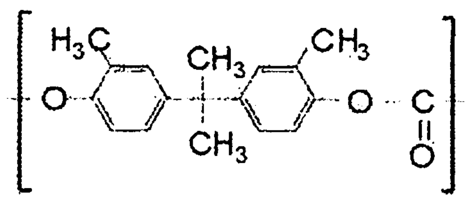

(6)

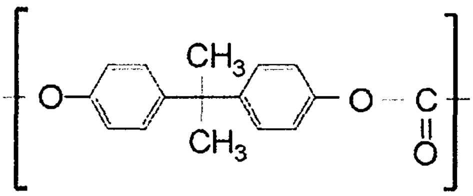

(7)

The method for producing Resin (B5) is not particularly limited, but it can be produced by a method similar to the above-described method for producing the polycarbonate resin (a1), except that bisphenol AP is used as a monomer.

Specific examples of Resin (B5) include Iupizeta FPC0220 (manufactured by Mitsubishi Gas Chemical Company, Inc.).

The weight average molecular weight of Resin (B5) is preferably 10,000 to 1,000,000, and more preferably 15,000 to 50,000.

The glass transition point of Resin (B5) is preferably 120 to 200°C, more preferably 130 to 190°C, and particularly preferably 140 to 190°C.

When using Resin (B5) as the high hardness resin, it is preferred to employ an embodiment in which a polycarbonate resin containing a structural unit represented by general formula (4a) is used as the polycarbonate resin (a1). Examples of such polycarbonate resins include Iupilon E-2000 (manufactured by Mitsubishi Engineering-Plastics Corporation). It is particularly preferred to use Iupizeta FPC0220 (manufactured by Mitsubishi Gas Chemical Company, Inc.) as Resin (B5) and Iupilon E-2000 (manufactured by Mitsubishi Engineering-Plastics Corporation) as the polycarbonate resin (a1).

When using Resin (B5) as the high hardness resin, as another resin to be contained in the high hardness resin layer, a resin that does not contain the structural unit (e) and contains the structural unit (d) explained with respect to Resin (B3) is preferred, and a resin consisting of only the structural unit (d) is more preferred. Specifically, an aromatic polycarbonate resin (e.g., Iupilon S-2000, Iupilon S-1000 and Iupilon E-2000; manufactured by Mitsubishi Engineering-Plastics Corporation), etc. can be used. When said another resin is contained, the ratio of Resin (B5) is preferably 45% by mass of more, and more preferably 55% by mass or more relative to all resins contained in the high hardness resin layer.

<Resin (B6)>

Resin (B6) is a copolymer (H) containing 50 to 95% by mass of a styrene structural unit and 5 to 50% by mass of an unsaturated dicarboxylic acid structural unit, or an alloy of the copolymer (H) and the above-described Resin (B1), or an alloy of the copolymer (H) and an acrylic resin. When an alloy is employed, in order to avoid reduction in Tg of the high hardness resin layer, an alloy of resins having higher Tgs is preferably employed.

As the styrene structural unit, the styrene-based monomer described with respect to Resin (B4) can be used. The copolymer (H) may contain two or more types of such styrene structural units. The content of the styrene structural unit is 50 to 95% by mass, preferably 60 to 90% by mass, and more preferably 65 to 87% by mass relative to the total mass of the copolymer (H).

Examples of an unsaturated dicarboxylic acid anhydride monomer constituting the unsaturated dicarboxylic acid structural unit include acid anhydrides of maleic acid, itaconic acid, citraconic acid, aconitic acid, etc. From the viewpoint of compatibility with the styrene-based monomer, maleic anhydride is preferred. Two or more of these unsaturated dicarboxylic acid anhydride monomers may be used as a mixture.

The content of the unsaturated dicarboxylic acid structural unit is 5 to 50% by mass, preferably 10 to 40% by mass, and more preferably 13 to 35% by mass relative to the total mass of the copolymer (H).

The copolymer (H) may contain a structural unit other than the above-described structural units. When the structural unit other than those is contained, the amount thereof is preferably 10 mol% or less, more preferably 5 mol% or less, and particularly preferably 2 mol% or less relative to all the structural units in the resin (H).

Examples of the structural unit other than those include a structural unit derived from general formula (1) below and a structural unit derived from general formula (2) below.

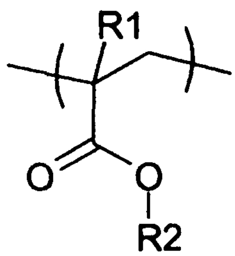

(1)

(In the formula, R1 represents a hydrogen atom or a methyl group; and R2 represents a $C_1$-$C_{18}$ alkyl group.)

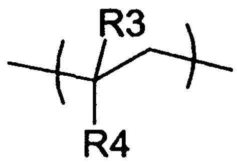

(2)

(In the formula, R3 represents a hydrogen atom or a methyl group; and R4 is a cyclohexyl group which may be substituted with a $C_1$-$C_4$ hydrocarbon group.)

The method for producing the copolymer (H) is not particularly limited, and it can be produced by means of solution polymerization, bulk polymerization or the like.

Specific examples of the copolymer (H) include XIBOND140 and XIBOND160 (manufactured by Polyscope).

The weight average molecular weight of the copolymer (H) is preferably 50,000 to 250,000, and more preferably 100,000 to 200,000.

The content of the copolymer (H) consisting of the styrene structural unit and the unsaturated dicarboxylic acid structural unit is preferably 10 to 90% by mass, more preferably 20 to 85% by mass, and particularly preferably 30 to 80% by mass relative to Resin (B6).

The glass transition point of Resin (B6) is preferably 110 to 150°C, more preferably 115 to 140°C, and particularly preferably 115 to 137°C.

When using Resin (B6) as the high hardness resin, it is preferred to employ an embodiment in which a polycarbonate resin containing a structural unit represented by general formula (4a) is used as the polycarbonate resin (a1). In addition, it is particularly preferred to employ an embodiment in which a monovalent phenol represented by general formula (5) (the carbon number of R1 is 8 to 22) is used as the end terminator. Examples of such polycarbonate resins include Iupizeta T-1380 (manufactured by Mitsubishi Gas Chemical Company, Inc.). It is particularly preferred to use an alloy of XIBOND160 consisting of 78% by mass of a styrene structural unit and 22% by mass of a maleic anhydride structural unit and an acrylic resin as Resin (B6) and Iupizeta T-1380 as the polycarbonate resin (a1).

The high hardness resin contained in the high hardness resin layer may consist of one material or two or more materials. When selecting two or more materials from Resin (B1) to Resin (B6), such materials can be selected from the same category or different categories. Further, a high hardness resin other than Resin (B1) to Resin (B6) may be contained. The content of the high hardness resin in the high hardness resin layer is preferably 70 to 100% by mass, more preferably 80 to 100% by mass, and particularly preferably 100% by mass.

The high hardness resin layer may contain another resin in addition to the high hardness resin described above. Examples of such resins include a methyl methacrylate-styrene copolymer, polymethyl methacrylate, polystyrene, polycarbonate, cycloolefin (co)polymer resin, acrylonitrile-styrene copolymer, acrylonitrile-butadiene-styrene copolymer and various elastomers. It is preferred that the resin in the high hardness resin layer consists of only the high hardness resin. When another resin is contained, the amount thereof is preferably 35% by mass or less, more preferably 25% by mass or less, and particularly preferably 10% by mass or less relative to the high hardness resin layer.

The high hardness resin layer may further contain an additive, etc. As the additive, the same additives as those described in "1. Base material layer" above can be used, and the same applies to the amount thereof.

The thickness of the high hardness resin layer affects surface hardness and impact resistance of the resin sheet for molding. Specifically, when the high hardness resin layer is too thin, surface hardness is reduced, and when it is too thick, impact resistance is reduced. The thickness of the high hardness resin layer is preferably 10 to 250 μm, more preferably 30 to 200 μm, and particularly preferably 60 to 150 μm.

## 3. Layering of base material layer and high hardness resin layer

Hereinafter, the case where the high hardness resin layer is layered on the base material layer will be described, though an additional layer may exist between the base material layer and the high hardness resin layer as described above. The layering method is not particularly limited, and even in the case where another layer exits, layering can be carried out in a similar manner. Examples of the layering method include: a method in which the base material layer and the high hardness resin layer that are individually formed are stacked and bonded by thermocompression; a method in which the base material layer and the high hardness resin layer that are individually formed are stacked and bonded by an adhesive; a method in which the base material layer and the high hardness resin layer are formed by co-extrusion molding; and a method in which the base material layer is subjected to in-mold molding to be integrated with the high hardness resin layer that is formed in advance. Among them, the method of co-extrusion molding is preferred from the viewpoint of the production cost and productivity.

The method of co-extrusion is not particularly limited. For example, in the case of the feed block system, the high hardness resin layer is arranged on one surface of the base material layer using a feed block, it is extruded into a

sheet shape using a T-die, and then it is passed through a molding roll while cooling, thereby forming a desired layered body. In the case of the multi-manifold system, the high hardness resin layer is arranged on one surface of the base material layer in a multi-manifold die, it is extruded into a sheet shape, and then it is passed through a molding roll while cooling, thereby forming a desired layered body. In this case, the ratio between the rotation rates (m/min) of the molding roll and a sheet take-up roll is controlled, and the sheet is cooled while being stretched in a uniaxial direction. The stretching magnification is controlled to be 1.0 to 1.5 times to control the in-plane retardation of the resin sheet. The in-plane retardation of the resin sheet of the present invention as measured at a wavelength of 543 nm is 4000 nm or more, preferably 4500 to 10000 nm, and more preferably 5500 to 8000 nm. When the in-plane retardation of the resin sheet is 4000 nm or more, it is preferred because, after the resin sheet is bonded as a front plate of a liquid crystal panel, when wearing polarized sunglasses and seeing a liquid crystal display, coloring and color unevenness are not easily caused.

The total thickness of the base material layer and the high hardness resin layer is preferably 0.5 to 3.5 mm, more preferably 0.5 to 3.0 mm, and particularly preferably 1.2 to 3.0 mm. When the total thickness is 0.5 mm or more, rigidity of the sheet can be kept. When the total thickness is 3.5 mm or less, it is possible to prevent deterioration of sensitivity of a touch sensor, for example, when a touch panel is provided under the sheet. The ratio of the thickness of the base material layer in the total thickness of the base material layer and the high hardness resin layer is preferably 75% to 99%, more preferably 80 to 99%, and particularly preferably 85 to 99%. When the ratio is within the above-described range, a balance between hardness and impact resistance can be achieved.

4. Hard coat layer, Hard coat anti-glare layer

The resin sheet of the present invention has a hard coat layer or a hard coat anti-glare layer. An additional layer may exist between the hard coat layer, the hard coat anti-glare layer and the high hardness resin layer, but it is preferred that the hard coat layer or the hard coat anti-glare layer is layered on the high hardness resin layer. The hard coat layer or the hard coat anti-glare layer is preferably prepared with an acrylic hard coat. In this specification, the "acrylic hard coat" means a coating film in which a monomer or oligomer or prepolymer containing a (meth)acryloyl group as a polymerization group is polymerized to form a crosslinked structure. It is preferred that the composition of the acrylic hard coat comprises 2 to 98% by mass of a (meth)acrylic monomer, 2 to 98% by mass of a (meth)acrylic oligomer and 0 to 15% by mass of a surface modifying agent. In addition, it is preferred that 0.001 to 7 parts by mass of a photopolymerization initiator is contained relative to 100 parts by mass of the total of the (meth)acrylic monomer, the (meth)acrylic oligomer and the surface modifying agent.

The hard coat layer or the hard coat anti-glare layer more preferably comprises 5 to 50% by mass of the (meth)acrylic monomer, 50 to 94% by mass of the (meth)acrylic oligomer and 1 to 10% by mass of the surface modifying agent, and particularly preferably comprises 20 to 40% by mass of the (meth)acrylic monomer, 60 to 78% by mass of the (meth)acrylic oligomer and 2 to 5% by mass of the surface modifying agent.

The amount of the photopolymerization initiator is more preferably 0.01 to 5 parts by mass, and particularly preferably 0.1 to 3 parts by mass relative to 100 parts by mass of the total of the (meth)acrylic monomer, the (meth)acrylic oligomer and the surface modifying agent.

(1) (Meth)acrylic monomer

As the (meth)acrylic monomer, those in which a (meth)acryloyl group as a functional group exits in the molecule can be used. The (meth)acrylic monomer may be a monofunctional monomer or a difunctional monomer or a trifunctional or higher monomer.

Examples of the monofunctional monomer include (meth)acrylic acid and (meth)acrylic acid ester. Specific examples of difunctional and/or trifunctional or higher (meth)acrylic monomers include diethylene glycol di(meth)acrylate, dipropylene glycol di(meth)acrylate, tripropylene glycol di(meth)acrylate, 1,6-hexanediol di(meth)acrylate, bisphenol A diglycidyl ether di(meth)acrylate, tetraethylene glycol di(meth)acrylate, neopentylglycol hydroxypivalate diacrylate, neopentylglycol di(meth)acrylate, 1,4-butanediol diacrylate, 1,3-butylene glycol di(meth)acrylate, dicyclopentanyl di(meth)acrylate, polyethylene glycol diacrylate, 1,4-butanediol oligoacrylate, neopentyl glycol oligoacrylate, 1,6-hexanediol oligoacrylate, trimethylol propane tri(meth)acrylate, trimethylol propane ethoxy tri(meth)acrylate, trimethylol propane propoxy tri(meth)acrylate, pentaerythritol tri(meth)acrylate, glyceryl propoxy tri(meth)acrylate, trimethylol propane trimethacrylate, trimethylol propane ethylene oxide adduct triacrylate, glycerin propylene oxide adduct triacrylate and pentaerythritol tetraacrylate.

The hard coat anti-glare layer may contain one or two or more (meth)acrylic monomers.

(2) (Meth)acrylic oligomer

Examples of the (meth)acrylic oligomer include a difunctional or higher polyfunctional urethane (meth)acrylate

oligomer [hereinafter also referred to as a polyfunctional urethane (meth)acrylate oligomer], a difunctional or higher polyfunctional polyester (meth)acrylate oligomer [hereinafter also referred to as a polyfunctional polyester (meth)acrylate oligomer] and a difunctional or higher polyfunctional epoxy (meth)acrylate oligomer [hereinafter also referred to as a polyfunctional epoxy (meth)acrylate oligomer. The hard coat anti-glare layer may contain one or two or more (meth)acrylic oligomers.

Examples of the polyfunctional urethane (meth)acrylate oligomer include: a urethanation reaction product of a (meth)acrylate monomer having at least one (meth)acryloyloxy group and hydroxyl group in one molecule and a polyisocyanate; and a urethanation reaction product of an isocyanate compound that is obtained by reacting a polyol with a polyisocyanate and a (meth)acrylate monomer having at least one (meth)acryloyloxy group and hydroxyl group in one molecule.

Examples of the (meth)acrylate monomer having at least one (meth)acryloyloxy group and hydroxyl group in one molecule to be used in the urethanation reaction include 2-hydroxyethyl (meth)acrylate, 2-hydroxypropyl (meth)acrylate, 2-hydroxybutyl (meth)acrylate, 2-hydroxy-3-phenoxypropyl (meth)acrylate, glycerin di(meth)acrylate, trimethylol propane di(meth)acrylate, pentaerythritol tri(meth)acrylate and dipentaerythritol penta(meth)acrylate.

Examples of the polyisocyanate to be used in the urethanation reaction include polyisocyanates (di- or tri-) such as hexamethylene diisocyanate, lysine diisocyanate, isophorone diisocyanate, dicyclohexylmethane diisocyanate, tolylene diisocyanate, xylylene diisocyanate, diisocyanates obtained by hydrogenation of an aromatic isocyanate among these diisocyanates (e.g., diisocyanates such as hydrogenated tolylene diisocyanate and hydrogenated xylylene diisocyanate), triphenylmethane triisocyanate and dimethylene triphenyl triisocyanate; and polyisocyanates obtained by multimerization of a diisocyanate.

As the polyol to be used in the urethanation reaction, aromatic, aliphatic and alicyclic polyols, a polyester polyol, a polyether polyol, etc. are generally used. Usually, examples of aliphatic and alicyclic polyols include 1,4-butanediol, 1,6-hexanediol, neopentyl glycol, ethylene glycol, propylene glycol, trimethylolethane, trimethylolpropane, dimethylolheptane, dimethylol propionic acid, dimethylol butyric acid, glycerin and hydrogenated bisphenol A.

Examples of the polyester polyol include those obtained by a dehydration condensation reaction of the above-described polyol and a polycarboxylic acid. Specific examples of the polycarboxylic acid include succinic acid, adipic acid, maleic acid, trimellitic acid, hexahydrophthalic acid, phthalic acid, isophthalic acid and terephthalic acid. These polycarboxylic acids may be in the form of an anhydride. Further, examples of the polyether polyol include polyalkylene glycol and a polyoxyalkylene-modified polyol that is obtained by a reaction of the above-described polyol or a phenol with alkylene oxide.

The polyfunctional polyester (meth)acrylate oligomer is obtained by a dehydration condensation reaction using (meth)acrylic acid, a polycarboxylic acid and a polyol. Examples of the polycarboxylic acid to be used in the dehydration condensation reaction include succinic acid, adipic acid, maleic acid, itaconic acid, trimellitic acid, pyromellitic acid, hexahydrophthalic acid, phthalic acid, isophthalic acid and terephthalic acid. These polycarboxylic acids may be in the form of an anhydride. Further, examples of the polyol to be used in the dehydration condensation reaction include 1,4-butanediol, 1,6-hexanediol, diethylene glycol, triethylene glycol, propylene glycol, neopentyl glycol, dimethylolheptane, dimethylol propionic acid, dimethylol butyric acid, trimethylolpropane, ditrimethylolpropane, pentaerythritol and dipentaerythritol.

The polyfunctional epoxy (meth)acrylate oligomer is obtained by an addition reaction of a polyglycidyl ether and (meth)acrylic acid. Examples of the polyglycidyl ether include ethylene glycol diglycidyl ether, propylene glycol diglycidyl ether, tripropylene glycol diglycidyl ether, 1,6-hexanediol diglycidyl ether and bisphenol A diglycidyl ether.

(3) Surface modifying agent

Examples of the surface modifying agent to be used in the present invention include those that modify surface performance of the hard coat anti-glare layer such as a leveling agent, an antistatic agent, a surfactant, a water-repellent oil-repellent agent, inorganic particles and organic particles.

Examples of the leveling agent include polyether-modified polyalkylsiloxane, polyether-modified siloxane, polyester-modified hydroxyl group-containing polyalkylsiloxane, polyether-modified polydimethylsiloxane having an alkyl group, modified polyether and silicon-modified acrylic.

Examples of the antistatic agent include glycerin fatty acid ester monoglyceride, glycerin fatty acid ester organic acid monoglyceride, polyglycerin fatty acid ester, sorbitan fatty acid ester, a cationic surfactant and an anionic surfactant.

Examples of the inorganic particles include silica particles, alumina particles, zirconia particles, silicon particles, silver particles and glass particles.

Examples of the organic particles include acrylic particles and silicon particles.

Examples of the surfactant and the water-repellent oil-repellent agent include fluorine-containing surfactants and water-repellent oil-repellent agents such as a fluorine-containing group/lipophilic group-containing oligomer and a fluorine-containing group/hydrophilic group/lipophilic group/UV reactive group-containing oligomer.

(4) Photopolymerization initiator

The hard coat layer or the hard coat anti-glare layer may contain a photopolymerization initiator. In this specification, the photopolymerization initiator means a photoradical generator.

Examples of a monofunctional photopolymerization initiator that can be used in the present invention include: 4-(2-hydroxyethoxy)phenyl(2-hydroxy-2-propyl) ketone [Darocur 2959: manufactured by Merck]; α-hydroxy-α,α'-dimethylacetophenone [Darocur 1173: manufactured by Merck]; acetophenone-based initiators such as methoxyacetophenone, 2,2'-dimethoxy-2-phenylacetophenone [Irgacure 651] and 1-hydroxy-cyclohexylphenylketone; benzoin ether-based initiators such as benzoin ethyl ether and benzoin isopropyl ether; and other materials including halogenated ketone, acylphosphinoxide and acylphosphonate.

(5) Method for forming hard coat layer, hard coat anti-glare layer

The method for forming the hard coat layer or the hard coat anti-glare layer is not particularly limited. For example, it can be formed by applying a hard coat solution onto a layer that is to be positioned under the hard coat anti-glare layer (e.g., high hardness resin layer), followed by performing photopolymerization.

The method of applying the hard coat solution (polymerizable composition) is not particularly limited, and a publicly-known method can be used. Examples thereof include a spin-coating method, a dipping method, a spraying method, a slide coating method, a bar coating method, a roll coating method, a gravure coating method, a meniscus coating method, a flexographic printing method, a screen printing method, a beat coating method and a brushing method.

As a lamp to be used for light irradiation at the time of photopolymerization, a lamp having a light emission distribution at a light wavelength of 420 nm or lower is used. Examples thereof include a low-pressure mercury lamp, a medium-pressure mercury lamp, a high-pressure mercury lamp, an ultrahigh pressure mercury lamp, a chemical lamp, a black light lamp, a microwave-excited mercury lamp and a metal halide lamp. Among them, the high-pressure mercury lamp or metal halide lamp is preferred because it efficiently emits a light in the active wavelength region of the initiator and it does not often emit a short-wavelength light, which reduces viscoelastic properties of a polymer obtained due to crosslinking, or a long-wavelength light, which heats and evaporates a reaction composition.

The irradiation intensity of the above-described lamp is a factor that influences the polymerization degree of the obtained polymer and is suitably controlled depending on every performance of an intended product. When blending a usual cleavage-type initiator having an acetophenone group, the illuminance is preferably 0.1 to 300 $mW/cm^2$. It is particularly preferred that the metal halide lamp is used and that the illuminance is 10 to 40 $mW/cm^2$.

A photopolymerization reaction is inhibited by oxygen in the air or oxygen dissolved in a reactive composition. For this reason, light irradiation is desirably carried out by using a technique that can prevent reaction inhibition caused by oxygen. As one of such techniques, there is a method in which a reactive composition is covered with a film made of polyethylene terephthalate or Teflon to block contact with oxygen and the reactive composition is irradiated with a light through the film. Alternatively, the composition may be irradiated with a light through a light-transmitting window under an inert atmosphere in which oxygen is replaced with an inert gas such as nitrogen gas and carbon dioxide gas.

When light irradiation is carried out under an inert atmosphere, a constant amount of an inert gas is continuously introduced in order to keep the oxygen concentration in the atmosphere at a low level. By this introduction of the inert gas, an air flow is generated on the surface of a reactive composition to cause monomer evaporation. For suppressing the level of monomer evaporation, the airflow velocity of the inert gas, as the velocity relative to a hard coat solution-applied layered body that moves under the inert gas atmosphere, is preferably 1 m/sec or less, and more preferably 0.1 m/sec or less. When the airflow velocity is within the above-described range, monomer evaporation due to the air flow is substantially suppressed.

For the purpose of improving adhesion of the hard coat layer or the hard coat anti-glare layer, the coated surface may be subjected to a pretreatment. Examples of the pretreatment include publicly-known methods such as a sandblasting method, a solvent treatment method, a corona discharge treatment method, a chromic acid treatment method, a flame treatment method, a hot air treatment method, an ozone treatment method, an ultraviolet treatment method, and a primer treatment method using a resin composition.

The hard coat layer or the hard coat anti-glare layer preferably has a pencil hardness of 2H or harder when ultraviolet irradiation is performed using a metal halide lamp having a UV light (254 nm) irradiation output of 20 $mW/cm^2$.

The thickness of the hard coat layer or the hard coat anti-glare layer is desirably 1 μm to 40 μm, and more desirably 2 μm to 10 μm. When the thickness is 1 μm or more, sufficient hardness can be obtained. When the thickness is 40 μm or less, the generation of a crack at the time of the curving process can be suppressed. Note that the thickness of the hard coat anti-glare layer can be measured by observing the cross section thereof using a microscope or the like and performing the actual measurement from the coating film interface to the surface.

The hard coat layer or hard coat anti-glare layer can be produced by applying an acrylic hard coat between a mirror surface mold or anti-glare mold and the high hardness resin, irradiating it with UV light to be cured, and then

releasing it from the mirror surface mold or anti-glare mold. When using the mirror surface mold, the resin sheet has a mirror surface hard coat layer, and when using the anti-glare mold, the resin sheet has a hard coat anti-glare layer. The material of the mirror surface mold or anti-glare mold is not limited as long as it transmits UV light, and examples of the material include glass and transparent resin.

The hard coat layer or hard coat anti-glare layer may be further modified. For example, any one or more of an antireflection treatment, an antifouling treatment, an antistatic treatment, a weather resistance treatment and an anti-glare treatment can be applied thereto. The methods for these treatments are not particularly limited, and publicly-known methods can be used. Examples thereof include a method of applying a reflection-reducing paint, a method of depositing a dielectric thin film and a method of applying an antistatic paint.

The pencil hardness of the resin sheet of the present invention is preferably 2H or harder, for example, 2H to 4H, and particularly preferably 3H to 4H. In this regard, the pencil hardness of the resin sheet means the highest hardness of the pencil, with which the surface of the hard coat anti-glare layer was not damaged when the pencil was pressed against the surface at an angle of 45° with respect to the surface with a load of 750 g, while increasing the hardness thereof (pencil scratch hardness test in accordance with JIS K 5600-5-4).

## 5. Resin film (X)

The present invention is a resin sheet for molding, wherein a resin film (X) that has an in-plane retardation of 50 nm or less as measured at a wavelength of 543 nm is stuck to one side of the resin sheet by means of an adhesive layer that contains an adhesive. The resin film (X) having an in-plane retardation of preferably 45 nm or less, and more preferably 3 to 45 nm is to be stuck. When the resin film (X) having an in-plane retardation of 50 nm or less is stuck, it is preferred because, even if the combination of slow phase axes or a slow phase axis and a fast phase axis of the resin film (X) and the resin sheet is shifted by thermoforming after sticking with the resin sheet, when bonding the resin sheet for molding as a front plate of a liquid crystal panel and then wearing polarized sunglasses and seeing a liquid crystal display, coloring and color unevenness are not easily caused.

In a preferred embodiment of the present invention, the resin film (X) is stuck to the side of the base material layer containing the polycarbonate resin (a1). In another preferred embodiment of the present invention, the resin film (X) consists of a polycarbonate film containing the polycarbonate resin (a1). In yet another preferred embodiment of the present invention, the resin film (X) consists of a film touch sensor obtained by providing a sensor electrode to a base material film. As the base material film, COP (cycloolefin polymer), COC (cycloolefin copolymer), an acrylic resin, a polycarbonate resin, a PET resin, etc. can be used, and a polycarbonate resin can be preferably used. Examples of the sensor electrode include a resistance film type sensor in which a transparent electrode prepared by ITO or the like is arranged and a capacitance type sensor.

## 6. Adhesive

The adhesive is not limited as long as it is a transparent optical adhesive. As the adhesive layer, an optical adhesive sheet (OCA: Optically Clear Adhesive) (Opteria series) manufactured by LINTEC Corporation, an optical transparent adhesive sheet of LUCIACS series manufactured by Nitto Denko Corporation, a highly transparent double-sided tape manufactured by Sekisui Chemical Co., Ltd., display optical adhesive silicone manufactured by Asahi Kasei Corporation or the like is preferably used.

The haze of the resin sheet of the present invention is preferably 2 to 30%, and more preferably 4 to 25%. The above-described haze is a value measured using an HR-100 type manufactured by Murakami Color Research Laboratory Co., Ltd. in accordance with JIS K 7136.

According to one embodiment of the present invention, a resin molded article obtained by molding with use of the above-described resin sheet for molding is provided. The molding method is not particularly limited, but thermoforming is suitable in view of characteristics of the resin sheet of the present invention. Thermoforming can be carried out by a method usually used in the art, and examples thereof include hot press molding, pressure forming, vacuum forming and TOM molding. The molding temperature is preferably 100°C to 200°C.

## EXAMPLES

Hereinafter, working examples of the present invention will be described, but the present invention is not limited to embodiments of the working examples.

### <Measurement of glass transition point (Tg) and melting point>

Using a differential scanning calorimeter DSC7020 manufactured by Hitachi High-Tech Science Corporation,

the glass transition point of each of the polycarbonate resins and high hardness resins used in the Examples and Comparative Examples and the melting point of each of the protective films were measured at a temperature raising rate of 10°C/min under nitrogen atmosphere. The weight of each resin used in the measurement was 10 to 20 mg.

<Measurement of pencil hardness of resin sheet>

Each of the resin sheets produced in the Examples and Comparative Examples was evaluated by the pencil scratch hardness test in accordance with JIS K 5600-5-4. The highest hardness of the pencil, with which the surface of the hard coat anti-glare layer was not damaged when the pencil was pressed against the surface at an angle of 45° with respect to the surface with a load of 750 g, while increasing the hardness thereof, was evaluated as the pencil hardness. The hardness of 2H or harder was evaluated as acceptable.

<Production of molded article having curved shape and evaluation of crack of hard coat after molding>

The resin sheets produced in the Examples and Comparative Examples were subjected to thermoforming. Regarding Examples 1-3 and 5-15 and Comparative Examples 1-6 and 8-11, molds for hot pressing with a clearance (gap between an upper mold and a lower mold for sandwiching a sheet for molding) of 2 mm and a molding R of 50 mm were used, and regarding Example 4 and Comparative Example 7, molds for hot pressing with a clearance of 3.5 mm and a molding R of 100 mm were used. The pressure applied to the molds for hot pressing was 0.6 MPa. The material of the molds was aluminum. The mold temperature at the time of thermoforming was 124°C in Examples 1-5, 7-11 and 13-15 and Comparative Examples 1-4, 9 and 10, and 143°C in Examples 6 and 12 and Comparative Examples 5-8 and 11.

Regarding the obtained molded articles, the presence or absence of a crack in the 50 mm R portion or 100 mm R portion was confirmed. Note that when a resin sheet in which the total thickness of the base material layer and the high hardness resin layer is 0.5 mm, 1.2 mm or 1.5 mm was formed using the molds for hot pressing with the clearance of 2 mm, a single-layer polycarbonate sheet of 1.5 mm, 0.8 mm or 0.5 mm was laid under it to adjust the total thickness to be 2 mm, thereby performing hot press molding.

<Flow mark>

Regarding each layered body of the high hardness resin layer and the polycarbonate resin layer before hard-coated produced in the Examples and Comparative Examples, outer appearance thereof was visually examined under a three-wavelength fluorescent lamp to confirm the presence or absence of a scaly pattern and white turbidity. The case where none of scaly pattern and white turbidity was observed was evaluated as "flow mark is absent", and the case where a scaly pattern or white turbidity was observed was evaluated as "flow mark is present".

<Measurement of in-plane retardation>

The retardation of each resin sheet or resin film was measured by using a birefringence evaluation apparatus WPA-200-L manufactured by Photonic Lattice, Inc. The wavelength for the measurement was 543 nm. Since the measurement of a retardation range of higher than 3500 nm cannot be carried out with a standard lens attached to the apparatus, a high phase difference measurement lens K4 FUJINON 1:1.4/16 mm HF16HA-1B was used.

<Measurement of haze of resin sheet>

Evaluation was made in accordance with JIS K 7136 using an HR-100 type manufactured by Murakami Color Research Laboratory Co., Ltd.

Example 1: R100 (Tg: 124°C)/low Tg PC (Tg: 125°C)/1.2 mmt

A layered body consisting of a base material layer and a high hardness resin layer was formed using a multilayer extrusion apparatus having a single screw extruder with a screw diameter of 35 mm, a single screw extruder with a screw diameter of 65 mm, a feed block connected to the respective extruders and a T-die connected to the feed block. Specifically, a high hardness resin (B2) (copolymer containing 21% by mass of a methyl methacrylate structural unit, 64% by mass of a styrene structural unit and 15% by mass of a maleic anhydride structural unit; RESISFY R100 (manufactured by Denka)) was continuously introduced into the single screw extruder with the screw diameter of 35 mm and extruded at a cylinder temperature of 230°C and a discharge rate of 2.6 kg/hour. Further, a polycarbonate resin (Iupizeta T-1380; manufactured by Mitsubishi Gas Chemical Company, Inc.) was continuously introduced into the single screw extruder with the screw diameter of 65 mm and extruded at a cylinder temperature of 240°C and a discharge rate

of 50.0 kg/hour.

The extruded high hardness resin and the extruded polycarbonate resin were introduced into the feed block having a distribution pin for two types of two layers, and the high hardness resin and the polycarbonate resin were layered at 240°C. It was further introduced into the T-die at 240°C to be extruded into a sheet shape, and using 3 mirror-finished rolls each at 120°C, 130°C and 190°C from the upstream side, it was transferred on the mirror surfaces and cooled and stretched, thereby obtaining the layered body consisting of the high hardness resin layer and the polycarbonate resin layer (base material layer). The stretching magnification was 1.3 times. The thickness of the obtained layered body was 1.2 mm, and the thickness of the high hardness resin layer near the center thereof was 60 μm.

A hard coat anti-glare layer was formed on the high hardness resin layer side of the layered body obtained above. The material of the hard coat anti-glare layer is as described below. Relative to 100 parts by mass of a mixture containing:

U6HA: hexafunctional urethane acrylate oligomer (manufactured by Shin-Nakamura Chemical Co., Ltd.), 60% by mass;
4EG-A: PEG200 # diacrylate (manufactured by Kyoeisha Chemical Co., Ltd.), 35% by mass; and
RS-90: fluorine-containing group/hydrophilic group/lipophilic group/UV reactive group-containing oligomer (manufactured by DIC), 5% by mass,
Photopolymerization initiator: 1-184 (manufactured by BASF [compound name: 1-hydroxy-cyclohexyl phenyl ketone]), 1 part by mass

The above-described material was applied to the layered body using a bar coater, the concave-convex surface of a frosted glass plate having a haze of 10% and a thickness of 2 mm was attached thereon, and it was irradiated with a metal halide lamp (20 mW/$cm^2$) from above the glass plate for 5 seconds to cure the hard coat. After the hard coat anti-glare layer was bonded, the frosted glass plate was removed, thereby preparing a resin sheet. The thickness of the hard coat anti-glare layer was 6 μm. The haze of the resin sheet was 9%, and the in-plane retardation was 6200 to 6500 nm.

A polycarbonate film (FS-2000 manufactured by Mitsubishi Gas Chemical Company, Inc., 100 μmt) as the resin film (X) was stuck to the base material layer side of the resin sheet by means of an adhesive (acrylic OCA), thereby obtaining a resin sheet for molding. The thickness of the polycarbonate film was 0.1 mm, and the in-plane retardation was 20 nm or less.

Example 2: R100 (Tg: 124°C)/low Tg PC (Tg: 125°C)/2 mmt

The discharge rate at the time of extrusion of the polycarbonate resin with the single screw extruder was adjusted to 83.0 kg/hour, and the thickness of the layered body of the high hardness resin layer and the polycarbonate resin layer (base material layer) was adjusted to 2 mm (the thickness of the high hardness resin layer near the center thereof was 60 μm). The stretching magnification was 1.17 times. A hard coat anti-glare layer was formed in a manner similar to that in Example 1 to obtain a resin sheet. The in-plane retardation of the resin sheet was 6200 to 6500 nm. A polycarbonate film was stuck to the resin sheet in a manner similar to that in Example 1, thereby preparing a resin sheet for molding.

Example 3: R100 (Tg: 124°C)/low Tg PC (Tg: 125°C)/0.5 mmt

The discharge rates at the time of extrusion of the high hardness resin (B2) and the polycarbonate resin with the single screw extruders were adjusted to 4.8 kg/hour and 35.0 kg/hour, respectively, and the thickness of the layered body of the high hardness resin layer and the polycarbonate resin layer (base material layer) was adjusted to 0.5 mm (the thickness of the high hardness resin layer near the center thereof was 60 μm). The stretching magnification was 1.5 times. A hard coat anti-glare layer was formed in a manner similar to that in Example 1 to obtain a resin sheet. The in-plane retardation was 4100 to 4500 nm. A polycarbonate film was stuck to the resin sheet in a manner similar to that in Example 1, thereby preparing a resin sheet for molding.

Example 4: R100 (Tg: 124°C)/low Tg PC (Tg: 125°C)/3.5 mmt

The discharge rates at the time of extrusion of the high hardness resin (B2) and the polycarbonate resin with the single screw extruders were adjusted to 1.3 kg/hour and 72.0 kg/hour, respectively, and the thickness of the layered body of the high hardness resin layer and the polycarbonate resin layer (base material layer) was adjusted to 3.5 mm (the thickness of the high hardness resin layer near the center thereof was 60 μm). The stretching magnification was 1.1 times. A hard coat anti-glare layer was formed in a manner similar to that in Example 1 to obtain a resin sheet. The in-plane retardation was 6800 to 7000 nm. A polycarbonate film was stuck to the resin sheet in a manner similar to that

in Example 1, thereby preparing a resin sheet for molding.

Example 5: R310 (Tg: 141°C)/low Tg PC (Tg: 125°C)/2 mmt

Using the same multilayer extrusion apparatus as Example 1, a layered body consisting of a base material layer and a high hardness resin layer was formed. Specifically, a high hardness resin (B2) (copolymer containing 6% by mass of a methyl methacrylate structural unit, 71% by mass of a styrene structural unit and 23% by mass of a maleic anhydride structural unit; RESISFY R310 (manufactured by Denka)) was continuously introduced into the single screw extruder with the screw diameter of 35 mm and extruded at a cylinder temperature of 240°C and a discharge rate of 2.6 kg/hour. Further, a polycarbonate resin (Iupizeta T-1380; manufactured by Mitsubishi Gas Chemical Company, Inc.) was continuously introduced into the single screw extruder with the screw diameter of 65 mm and extruded at a cylinder temperature of 240°C and a discharge rate of 83.0 kg/hour.

After that, extrusion with the T-die was carried out in a manner similar to that in Example 1, thereby obtaining the layered body consisting of the high hardness resin layer and the polycarbonate resin layer (base material layer). The thickness of the obtained layered body was 2 mm, and the thickness of the high hardness resin layer near the center thereof was 60 $\mu$m. The stretching magnification was 1.17 times.

A hard coat anti-glare layer was formed in a manner similar to that in Example 1. The in-plane retardation of the resin sheet was 6200 to 6500 nm. A polycarbonate film was stuck to the resin sheet in a manner similar to that in Example 1, thereby preparing a resin sheet for molding.

Example 6: R310 (Tg: 141°C)/S-1000 (Tg: 147°C)/2 mmt

Using the same multilayer extrusion apparatus as Example 1, a layered body consisting of a base material layer and a high hardness resin layer was formed. Specifically, a high hardness resin (B2) (copolymer containing 6% by mass of a methyl methacrylate structural unit, 71% by mass of a styrene structural unit and 23% by mass of a maleic anhydride structural unit; RESISFY R310 (manufactured by Denka)) was continuously introduced into the single screw extruder with the screw diameter of 35 mm and extruded at a cylinder temperature of 240°C and a discharge rate of 2.6 kg/hour. Further, a polycarbonate resin (Iupilon S-1000; manufactured by Mitsubishi Engineering-Plastics Corporation) was continuously introduced into the single screw extruder with the screw diameter of 65 mm and extruded at a cylinder temperature of 280°C and a discharge rate of 83.0 kg/hour.

The extruded high hardness resin and the extruded polycarbonate resin were introduced into a feed block having a distribution pin for two types of two layers, and the high hardness resin and the polycarbonate resin were layered at 280°C. It was further introduced into the T-die at 280°C to be extruded into a sheet shape, and using 3 mirror-finished rolls each at 120°C, 130°C and 190°C from the upstream side, it was transferred on the mirror surfaces and cooled and stretched, thereby obtaining the layered body consisting of the high hardness resin layer and the polycarbonate resin layer (base material layer). The thickness of the obtained layered body was 2 mm, and the thickness of the high hardness resin layer near the center thereof was 60 $\mu$m. The stretching magnification was 1.17 times.

A hard coat anti-glare layer was formed in a manner similar to that in Example 1. The in-plane retardation of the resin sheet was 6200 to 6500 nm. A polycarbonate film was stuck to the resin sheet in a manner similar to that in Example 1, thereby preparing a resin sheet for molding.

Example 7: PM120N (Tg: 120°C)/low Tg PC (Tg: 125°C)/1.5 mmt

Using the same multilayer extrusion apparatus as Example 1, a layered body consisting of a base material layer and a high hardness resin layer was formed. Specifically, a high hardness resin (B4) (copolymer containing 7% by mass of a styrene structural unit, 86% by mass of a methyl methacrylate structural unit and 7% by mass of a N-phenylmaleimide structural unit; DELPET PM120N (manufactured by Asahi Kasei Chemicals Corporation)) was continuously introduced into the single screw extruder with the screw diameter of 35 mm and extruded at a cylinder temperature of 230°C and a discharge rate of 2.6 kg/hour. Further, a polycarbonate resin (Iupizeta T-1380; manufactured by Mitsubishi Gas Chemical Company, Inc.) was continuously introduced into the single screw extruder with the screw diameter of 65 mm and extruded at a cylinder temperature of 240°C and a discharge rate of 62.0 kg/hour.

After that, extrusion with the T-die was carried out in a manner similar to that in Example 1, thereby obtaining the layered body consisting of the high hardness resin layer and the polycarbonate resin layer (base material layer). The thickness of the obtained layered body was 1.5 mm, and the thickness of the high hardness resin layer near the center thereof was 60 $\mu$m. The stretching magnification was 1.23 times.

A hard coat anti-glare layer was formed in a manner similar to that in Example 1. The in-plane retardation of the resin sheet was 6200 to 6500 nm. A polycarbonate film was stuck to the resin sheet in a manner similar to that in Example 1, thereby preparing a resin sheet for molding.

Example 8: R200 (Tg: 126°C)/low Tg PC (Tg: 125°C)/2 mmt

Using the same multilayer extrusion apparatus as Example 1, a layered body consisting of a base material layer and a high hardness resin layer was formed. Specifically, a high hardness resin (B2) (copolymer containing 26% by mass of a methyl methacrylate structural unit, 55% by mass of a styrene structural unit and 19% by mass of a maleic anhydride structural unit; RESISFY R200 (manufactured by Denka)) was continuously introduced into the single screw extruder with the screw diameter of 35 mm and extruded at a cylinder temperature of 230°C and a discharge rate of 2.6 kg/hour. Further, a polycarbonate resin (Iupizeta T-1380; manufactured by Mitsubishi Gas Chemical Company, Inc.) was continuously introduced into the single screw extruder with the screw diameter of 65 mm and extruded at a cylinder temperature of 240°C and a discharge rate of 83.0 kg/hour.
After that, extrusion with the T-die was carried out in a manner similar to that in Example 1, thereby obtaining the layered body consisting of the high hardness resin layer and the polycarbonate resin layer (base material layer). The thickness of the obtained layered body was 2 mm, and the thickness of the high hardness resin layer near the center thereof was 60 μm. The stretching magnification was 1.17 times.
The material of the hard coat anti-glare layer was the same as Example 1. It was applied to the layered body using a bar coater, the concave-convex surface of a frosted glass plate having a haze of 30% and a thickness of 2 mm was attached thereon, and it was irradiated with a metal halide lamp (20 $mW/cm^2$) from above the glass plate for 5 seconds to cure the hard coat. After the hard coat anti-glare layer was bonded, the frosted glass plate was removed, thereby preparing a resin sheet. The thickness of the hard coat anti-glare layer was 6 μm. The haze of the resin sheet was 29%, and the in-plane retardation of the resin sheet was 6200 to 6500 nm. A polycarbonate film was stuck to the resin sheet in a manner similar to that in Example 1, thereby preparing a resin sheet for molding.

Example 9: C-PC (KH3410UR) (Tg: 118°C)/low Tg PC (Tg: 125°C)/2 mmt

Using the same multilayer extrusion apparatus as Example 1, a layered body consisting of a base material layer and a high hardness resin layer was formed. Specifically, a high hardness resin (B3) (polycarbonate resin; Iupilon KH3410UR (manufactured by Mitsubishi Engineering-Plastics Corporation)) was continuously introduced and extruded at a cylinder temperature of 270°C and a discharge rate of 2.6 kg/hour. Further, a polycarbonate resin (Iupizeta T-1380; manufactured by Mitsubishi Gas Chemical Company, Inc.) was continuously introduced into the single screw extruder with the screw diameter of 65 mm and extruded at a cylinder temperature of 240°C and a discharge rate of 83.0 kg/hour.
After that, extrusion with the T-die was carried out in a manner similar to that in Example 1, thereby obtaining the layered body consisting of the high hardness resin layer and the polycarbonate resin layer (base material layer). The thickness of the obtained layered body was 2 mm, and the thickness of the high hardness resin layer near the center thereof was 60 μm. The stretching magnification was 1.17 times.
A hard coat anti-glare layer was formed in a manner similar to that in Example 8. The in-plane retardation of the resin sheet was 6200 to 6500 nm. A polycarbonate film was stuck to the resin sheet in a manner similar to that in Example 1, thereby preparing a resin sheet for molding.

Example 10: Alloy of R100 and PM120N (Tg: 123°C)/low Tg PC (Tg: 125°C)/1.2 mmt

75% by mass of a copolymer containing 21% by mass of a methyl methacrylate structural unit, 64% by mass of a styrene structural unit and 15% by mass of a maleic anhydride structural unit (RESISFY R100 (manufactured by Denka)) and 25% by mass of a copolymer containing 7% by mass of a styrene structural unit, 86% by mass of a methyl methacrylate structural unit and 7% by mass of a N-phenylmaleimide structural unit (DELPET PM120N; manufactured by Asahi Kasei Chemicals Corporation) were introduced into an extruder having a screw diameter of 26 mm (TEM-26SS, L/D≈40; manufactured by Toshiba Machine Co., Ltd.) and melt-kneaded at 240°C to obtain a high hardness resin (B4).
Using the same multilayer extrusion apparatus as Example 1, a layered body consisting of a base material layer and a high hardness resin layer was formed. Specifically, the above-described high hardness resin (B4) was continuously introduced into the single screw extruder with the screw diameter of 35 mm and extruded at a cylinder temperature of 230°C and a discharge rate of 2.6 kg/hour. Further, a polycarbonate resin (Iupizeta T-1380; manufactured by Mitsubishi Gas Chemical Company, Inc.) was continuously introduced into the single screw extruder with the screw diameter of 65 mm and extruded at a cylinder temperature of 240°C and a discharge rate of 50.0 kg/hour.
After that, extrusion with the T-die was carried out in a manner similar to that in Example 1, thereby obtaining the layered body consisting of the high hardness resin layer and the polycarbonate resin layer (base material layer). The thickness of the obtained layered body was 1.2 mm, and the thickness of the high hardness resin layer near the center thereof was 60 μm. The stretching magnification was 1.3 times.
A hard coat anti-glare layer was formed in a manner similar to that in Example 8. The in-plane retardation of the resin sheet was 6200 to 6500 nm.

A polycarbonate film (FS-2000 manufactured by Mitsubishi Gas Chemical Company, Inc., 200 μmt) as the resin film (X) was stuck to the base material layer side of the resin sheet by means of an adhesive (acrylic OCA), thereby obtaining a resin sheet for molding. The thickness of the polycarbonate film was 0.2 mm, and the in-plane retardation was 45 nm or less.

Example 11: R310 (Tg: 141°C)/low Tg PC (Tg: 125°C)/0.5 mmt

Using the same multilayer extrusion apparatus as Example 1, a layered body consisting of a base material layer and a high hardness resin layer was formed. Specifically, a high hardness resin (B2) (copolymer containing 6% by mass of a methyl methacrylate structural unit, 71% by mass of a styrene structural unit and 23% by mass of a maleic anhydride structural unit; RESISFY R310 (manufactured by Denka)) was continuously introduced into the single screw extruder with the screw diameter of 35 mm and extruded at a cylinder temperature of 230°C and a discharge rate of 8 kg/hour. Further, a polycarbonate resin (Iupizeta T-1380; manufactured by Mitsubishi Gas Chemical Company, Inc.) was continuously introduced into the single screw extruder with the screw diameter of 65 mm and extruded at a cylinder temperature of 240°C and a discharge rate of 35.0 kg/hour.

After that, extrusion with the T-die was carried out in a manner similar to that in Example 1, thereby obtaining the layered body consisting of the high hardness resin layer and the polycarbonate resin layer (base material layer). The thickness of the obtained layered body was 0.5 mm, and the thickness of the high hardness resin layer near the center thereof was 100 μm. The stretching magnification was 1.5 times.

The material of the hard coat anti-glare layer was the same as Example 1. It was applied to the layered body using a bar coater, the concave-convex surface of a frosted glass plate having a haze of 4% and a thickness of 2 mm was attached thereon, and it was irradiated with a metal halide lamp (20 $mW/cm^2$) from above the glass plate for 5 seconds to cure the hard coat. After the hard coat anti-glare layer was bonded, the frosted glass plate was removed, thereby preparing a resin sheet. The thickness of the hard coat anti-glare layer was 6 μm. The haze of the resin sheet was 2%, and the in-plane retardation was 4100 to 4500 nm.

A polycarbonate film was stuck to the resin sheet in a manner similar to that in Example 10, thereby preparing a resin sheet for molding.

Example 12: FPC0220 (Tg: 184°C)/E2000 (147°C)/1.2 mmt

Using the same multilayer extrusion apparatus as Example 1, a layered body consisting of a base material layer and a high hardness resin layer was formed. Specifically, a high hardness resin (B5) (polycarbonate resin containing a structural unit represented by general formula (8); Iupizeta FPC0220 (manufactured by Mitsubishi Gas Chemical Company, Inc.)) was continuously introduced into the single screw extruder with the screw diameter of 35 mm and extruded at a cylinder temperature of 300°C and a discharge rate of 2.6 kg/hour. Further, a polycarbonate resin (Iupilon E2000; manufactured by Mitsubishi Gas Chemical Company, Inc.) was continuously introduced into the single screw extruder with the screw diameter of 65 mm and extruded at a cylinder temperature of 280°C and a discharge rate of 50.0 kg/hour.

The extruded high hardness resin and the extruded polycarbonate resin were introduced into a feed block having a distribution pin for two types of two layers, and the high hardness resin and the polycarbonate resin were layered at 280°C. It was further introduced into the T-die at 280°C to be extruded into a sheet shape, and using 3 mirror-finished rolls each at 120°C, 130°C and 190°C from the upstream side, it was transferred on the mirror surfaces and cooled and stretched, thereby obtaining the layered body consisting of the high hardness resin layer and the polycarbonate resin layer (base material layer). The thickness of the obtained layered body was 1.2 mm, and the thickness of the high hardness resin layer near the center thereof was 60 μm. The stretching magnification was 1.3 times.

A hard coat anti-glare layer was formed in a manner similar to that in Example 11. The in-plane retardation of the resin sheet was 6200 to 6500 nm.

A polycarbonate film was stuck to the resin sheet in a manner similar to that in Example 10, thereby preparing a resin sheet for molding.

The first protective film and the second protective film were bonded in a manner similar to that in Example 1.

Example 13: MS-H (Tg: 115°C)/low Tg PC (Tg: 125°C)/1.2 mmt

Using the same multilayer extrusion apparatus as Example 1, a layered body consisting of a base material layer and a high hardness resin layer was formed. A high hardness resin (B1) (resin, wherein in general formula (1), both R1 and R2 are a methyl group and in general formula (2), R3 is a hydrogen atom and R4 is a cyclohexyl group; consisting of 75 mol% of a (meth)acrylic acid ester structural unit and 25 mol% of an aliphatic vinyl structural unit, and having a weight average molecular weight of 120,000) was continuously introduced into the single screw extruder with

the screw diameter of 35 mm and extruded at a cylinder temperature of 240°C and a discharge rate of 2.6 kg/hour. Further, a polycarbonate resin (Iupizeta T-1380; manufactured by Mitsubishi Gas Chemical Company, Inc.) was continuously introduced into the single screw extruder with the screw diameter of 65 mm and extruded at a cylinder temperature of 240°C and a discharge rate of 50.0 kg/hour.

After that, extrusion with the T-die was carried out in a manner similar to that in Example 1, thereby obtaining the layered body consisting of the high hardness resin layer and the polycarbonate resin layer (base material layer). The thickness of the obtained layered body was 1.2 mm, and the thickness of the high hardness resin layer near the center thereof was 60 μm. The stretching magnification was 1.3 times.

A hard coat anti-glare layer was formed in a manner similar to that in Example 11.

The in-plane retardation of the resin sheet was 6200 to 6500 nm.

A polycarbonate film was stuck to the resin sheet in a manner similar to that in Example 10, thereby preparing a resin sheet for molding.

Example 14: Alloy of V040 and St-MAH resin (Tg: 136°C)/low Tg PC (Tg: 125°C)/1.2 mmt

75% by mass of a copolymer containing 78% by mass of a styrene structural unit and 22% by mass of a maleic anhydride structural unit (XIBOND160 (manufactured by Polyscope)) and 25% by mass of an acrylic resin (Altuglas V040 (manufactured by Arkema)) were introduced into an extruder having a screw diameter of 26 mm (TEM-26SS, L/D≈40; manufactured by Toshiba Machine Co., Ltd.) and melt-kneaded at 240°C to obtain a high hardness resin (B6).

Using the same multilayer extrusion apparatus as Example 1, a layered body consisting of a base material layer and a high hardness resin layer was formed. Specifically, the above-described high hardness resin (B6) was continuously introduced into the single screw extruder with the screw diameter of 35 mm and extruded at a cylinder temperature of 230°C and a discharge rate of 2.6 kg/hour. Further, a polycarbonate resin (Iupizeta T-1380; manufactured by Mitsubishi Gas Chemical Company, Inc.) was continuously introduced into the single screw extruder with the screw diameter of 65 mm and extruded at a cylinder temperature of 240°C and a discharge rate of 50.0 kg/hour.

After that, extrusion with the T-die was carried out in a manner similar to that in Example 1, thereby obtaining the layered body consisting of the high hardness resin layer and the polycarbonate resin layer (base material layer). The thickness of the obtained layered body was 1.2 mm, and the thickness of the high hardness resin layer near the center thereof was 60 μm. The stretching magnification was 1.3 times.

A hard coat anti-glare layer was formed in a manner similar to that in Example 8. The in-plane retardation of the resin sheet was 6200 to 6500 nm.

A polycarbonate film (FS-2000 manufactured by Mitsubishi Gas Chemical Company, Inc., 200 μmt) as the resin film (X) was stuck to the base material layer side of the resin sheet by means of an adhesive (acrylic OCA), thereby obtaining a resin sheet for molding. The thickness of the polycarbonate film was 0.2 mm, and the in-plane retardation was 45 nm or less.

Example 15: Alloy of V020 and St-MAH resin (Tg: 132°C)/low Tg PC (Tg: 125°C)/1.2 mmt

75% by mass of a copolymer containing 78% by mass of a styrene structural unit and 22% by mass of a maleic anhydride structural unit (XIBOND160 (manufactured by Polyscope)) and 25% by mass of an acrylic resin (Altuglas V020 (manufactured by Arkema)) were introduced into an extruder having a screw diameter of 26 mm (TEM-26SS, L/D≈40; manufactured by Toshiba Machine Co., Ltd.) and melt-kneaded at 240°C to obtain a high hardness resin (B6).

Using the same multilayer extrusion apparatus as Example 1, a layered body consisting of a base material layer and a high hardness resin layer was formed. Specifically, the above-described high hardness resin (B6) was continuously introduced into the single screw extruder with the screw diameter of 35 mm and extruded at a cylinder temperature of 230°C and a discharge rate of 2.6 kg/hour. Further, a polycarbonate resin (Iupizeta T-1380; manufactured by Mitsubishi Gas Chemical Company, Inc.) was continuously introduced into the single screw extruder with the screw diameter of 65 mm and extruded at a cylinder temperature of 240°C and a discharge rate of 50.0 kg/hour.

After that, extrusion with the T-die was carried out in a manner similar to that in Example 1, thereby obtaining the layered body consisting of the high hardness resin layer and the polycarbonate resin layer (base material layer). The thickness of the obtained layered body was 1.2 mm, and the thickness of the high hardness resin layer near the center thereof was 60 μm. The stretching magnification was 1.3 times.

A hard coat anti-glare layer was formed in a manner similar to that in Example 8. The in-plane retardation of the resin sheet was 6200 to 6500 nm.

A polycarbonate film (FS-2000 manufactured by Mitsubishi Gas Chemical Company, Inc., 200 μmt) as the resin film (X) was stuck to the base material layer side of the resin sheet by means of an adhesive (acrylic OCA), thereby obtaining a resin sheet for molding. The thickness of the polycarbonate film was 0.2 mm, and the in-plane retardation was 45 nm or less.

Comparative Example 1: MS-H (Tg: 115°C)/low Tg PC (125°C)/0.5 mmt

The cylinder temperature and the discharge rate at the time of extrusion of the high hardness resin (B1) with the single screw extruder were adjusted to 230°C and 8.0 kg/hour, respectively, the discharge rate at the time of extrusion of the polycarbonate resin with the single screw extruder was adjusted to 35.0 kg/hour, and the thickness of the layered body of the high hardness resin layer and the polycarbonate resin layer (base material layer) was adjusted to 0.5 mm (the thickness of the high hardness resin layer near the center thereof was 60 μm). The stretching magnification was 1.5 times.

A hard coat anti-glare layer was formed in a manner similar to that in Example 1. The in-plane retardation of the resin sheet was 4100 to 4500 nm.

A polycarbonate film (NF-2000NS manufactured by Mitsubishi Gas Chemical Company, Inc., 500 μmt) as the resin film (X) was stuck to the base material layer side of the resin sheet by means of an adhesive (acrylic OCA), thereby obtaining a resin sheet for molding. The thickness of the polycarbonate film was 0.5 mm, and the in-plane retardation was 300 to 400 nm.

Comparative Example 2: Alloy of R100 and PMMA (Tg: 115°C)/low Tg PC (Tg: 125°C)/1.2 mmt

75% by mass of a copolymer consisting of 21% by mass of a methyl methacrylate structural unit, 64% by mass of a styrene structural unit and 15% by mass of a maleic anhydride structural unit (RESISFY R100; manufactured by Denka) and 25% by mass of an acrylic resin (PARAPET HR-1000L (PMMA); manufactured by Kuraray Co., Ltd.) were introduced into an extruder having a screw diameter of 26 mm (TEM-26SS, L/D≈40; manufactured by Toshiba Machine Co., Ltd.) and melt-kneaded at 240°C to obtain a high hardness resin (B2).

Using the same multilayer extrusion apparatus as Example 1, a layered body consisting of a base material layer and a high hardness resin layer was formed. Specifically, the above-described high hardness resin was continuously introduced into the single screw extruder with the screw diameter of 35 mm and extruded at a cylinder temperature of 230°C and a discharge rate of 2.6 kg/hour. Further, a polycarbonate resin (Iupizeta T-1380; manufactured by Mitsubishi Gas Chemical Company, Inc.) was continuously introduced into the single screw extruder with the screw diameter of 65 mm and extruded at a cylinder temperature of 240°C and a discharge rate of 50.0 kg/hour.

After that, extrusion with the T-die was carried out in a manner similar to that in Example 1, thereby obtaining the layered body consisting of the high hardness resin layer and the polycarbonate resin layer (base material layer). The thickness of the obtained layered body was 1.2 mm, and the thickness of the high hardness resin layer near the center thereof was 60 μm. The stretching magnification was 1.3 times.

A hard coat anti-glare layer was formed in a manner similar to that in Example 1.

The in-plane retardation of the resin sheet was 6200 to 6500 nm. A polycarbonate film (NF-2000NS manufactured by Mitsubishi Gas Chemical Company, Inc., 500 μmt) as the resin film (X) was stuck to the base material layer side of the resin sheet by means of an adhesive (acrylic OCA), thereby obtaining a resin sheet for molding. The thickness of the polycarbonate film was 0.5 mm, and the in-plane retardation was 300 to 400 nm.

Comparative Example 3: R100 (Tg: 124°C)/low Tg PC (Tg: 125°C)/1.2 mmt

A layered body consisting of a base material layer and a high hardness resin layer was formed using a multilayer extrusion apparatus having a single screw extruder with a screw diameter of 35 mm, a single screw extruder with a screw diameter of 65 mm, a feed block connected to the respective extruders and a T-die connected to the feed block. Specifically, a high hardness resin (B2) (copolymer containing 21% by mass of a methyl methacrylate structural unit, 64% by mass of a styrene structural unit and 15% by mass of a maleic anhydride structural unit; RESISFY R100 (manufactured by Denka)) was continuously introduced into the single screw extruder with the screw diameter of 35 mm and extruded at a cylinder temperature of 230°C and a discharge rate of 2.6 kg/hour. Further, a polycarbonate resin (Iupizeta T-1380; manufactured by Mitsubishi Gas Chemical Company, Inc.) was continuously introduced into the single screw extruder with the screw diameter of 65 mm and extruded at a cylinder temperature of 240°C and a discharge rate of 50.0 kg/hour.

The extruded high hardness resin and the extruded polycarbonate resin were introduced into the feed block having a distribution pin for two types of two layers, and the high hardness resin and the polycarbonate resin were layered at 240°C. It was further introduced into the T-die at 240°C to be extruded into a sheet shape, and using 3 mirror-finished rolls each at 120°C, 130°C and 190°C from the upstream side, it was transferred on the mirror surfaces and cooled and stretched, thereby obtaining the layered body consisting of the high hardness resin layer and the polycarbonate resin layer (base material layer). The stretching magnification was 1.3 times. The thickness of the obtained layered body was 1.2 mm, and the thickness of the high hardness resin layer near the center thereof was 60 μm. A hard coat anti-glare layer was formed in a manner similar to that in Example 1.

The in-plane retardation of the resin sheet was 3000 to 3500 nm. A polycarbonate film (FS-2000 manufactured by Mitsubishi Gas Chemical Company, Inc., 100 μmt) as the resin film (X) was stuck to the base material layer side of the resin sheet by means of an adhesive (acrylic OCA), thereby obtaining a resin sheet for molding. The thickness of the polycarbonate film was 0.1 mm, and the in-plane retardation was 20 nm or less.

Comparative Example 4

A layered body consisting of a high hardness resin layer and a polycarbonate resin layer (base material layer) was obtained in a manner similar to that in Example 1.

A hard coat anti-glare layer was formed in a manner similar to that in Example 1. The in-plane retardation of the resin sheet was 6200 to 6500 nm.

A polycarbonate film (NF-2000 (H11) manufactured by Mitsubishi Gas Chemical Company, Inc., 500 μmt) as the resin film (X) was stuck to the base material layer side of the resin sheet by means of an adhesive (acrylic OCA), thereby obtaining a resin sheet for molding. The thickness of the polycarbonate film was 0.5 mm, and the in-plane retardation was 5000 to 6000 nm.

Comparative Example 5: MS-H (Tg: 115°C)/S1000 (Tg: 147°C)/1.2 mmt

Using the same multilayer extrusion apparatus as Example 1, a layered body consisting of a base material layer and a high hardness resin layer was formed. Specifically, a high hardness resin (B1) (resin, wherein in general formula (1), both R1 and R2 are a methyl group and in general formula (2), R3 is a hydrogen atom and R4 is a cyclohexyl group; consisting of 75 mol% of a (meth)acrylic acid ester structural unit and 25 mol% of an aliphatic vinyl structural unit, and having a weight average molecular weight of 120,000) was continuously introduced into the single screw extruder with the screw diameter of 35 mm and extruded at a cylinder temperature of 240°C and a discharge rate of 2.6 kg/hour. Further, a polycarbonate resin (Iupilon S-1000; manufactured by Mitsubishi Engineering-Plastics Corporation) was continuously introduced into the single screw extruder with the screw diameter of 65 mm and extruded at a cylinder temperature of 280°C and a discharge rate of 50.0 kg/hour.

The extruded high hardness resin and the extruded polycarbonate resin were introduced into a feed block having a distribution pin for two types of two layers, and the high hardness resin and the polycarbonate resin were layered at 270°C. It was further introduced into the T-die at 270°C to be extruded into a sheet shape, and using 3 mirror-finished rolls each at 120°C, 130°C and 190°C from the upstream side, it was transferred on the mirror surfaces and cooled, thereby obtaining the layered body consisting of the high hardness resin layer and the polycarbonate resin layer (base material layer). The stretching magnification was 1.3 times. The thickness of the obtained layered body was 1.2 mm, and the thickness of the high hardness resin layer near the center thereof was 60 μm.

A hard coat anti-glare layer was formed in a manner similar to that in Example 1. The in-plane retardation of the resin sheet was 6200 to 6500 nm.

A polycarbonate film (FS-2000 manufactured by Mitsubishi Gas Chemical Company, Inc., 200 μmt) as the resin film (X) was stuck to the base material layer side of the resin sheet by means of an adhesive (acrylic OCA), thereby obtaining a resin sheet for molding. The thickness of the polycarbonate film was 0.2 mm, and the in-plane retardation was 45 nm or less.

Comparative Example 6: MS-H (Tg: 115°C)/S1000 (Tg: 147°C)/2 mmt

In Comparative Example 5, the discharge rate at the time of extrusion of the polycarbonate resin with the single screw extruder was adjusted to 83.0 kg/hour, and the thickness of the layered body of the high hardness resin layer and the polycarbonate resin layer (base material layer) was adjusted to 2 mm (the thickness of the high hardness resin layer near the center thereof was 60 μm). The stretching magnification was 1.17 times. A hard coat anti-glare layer was formed in a manner similar to that in Example 1. The in-plane retardation of the resin sheet was 6200 to 6500 nm.

A polycarbonate film (FS-2000 manufactured by Mitsubishi Gas Chemical Company, Inc., 200 μmt) as the resin film (X) was stuck to the base material layer side of the resin sheet by means of an adhesive (acrylic OCA), thereby obtaining a resin sheet for molding. The thickness of the polycarbonate film was 0.2 mm, and the in-plane retardation was 45 nm or less.

Comparative Example 7: MS-H (Tg: 115°C)/S1000 (Tg: 147°C)/3.5 mmt

In Comparative Example 5, the discharge rates at the time of extrusion of the high hardness resin (B1) and the polycarbonate resin with the single screw extruders were adjusted to 1.3 kg/hour and 72.0 kg/hour, respectively, and the thickness of the layered body of the high hardness resin layer and the polycarbonate resin layer (base material layer)

was adjusted to 3.5 mm (the thickness of the high hardness resin layer near the center thereof was 60 μm). The stretching magnification was 1.1 times.

A hard coat anti-glare layer was formed in a manner similar to that in Example 1. The in-plane retardation of the resin sheet was 6800 to 7000 nm.

A polycarbonate film (FS-2000 manufactured by Mitsubishi Gas Chemical Company, Inc., 200 μmt) as the resin film (X) was stuck to the base material layer side of the resin sheet by means of an adhesive (acrylic OCA), thereby obtaining a resin sheet for molding. The thickness of the polycarbonate film was 0.2 mm, and the in-plane retardation was 45 nm or less.

Comparative Example 8: MS-H (Tg: 115°C)/S1000 (Tg: 147°C)/0.5 mmt

In Comparative Example 5, the discharge rates at the time of extrusion of the high hardness resin (B1) and the polycarbonate resin with the single screw extruders were adjusted to 4.8 kg/hour and 35.0 kg/hour, respectively, and the thickness of the layered body of the high hardness resin layer and the polycarbonate resin layer (base material layer) was adjusted to 0.5 mm (the thickness of the high hardness resin layer near the center thereof was 60 μm). The stretching magnification was 1.5 times.

A hard coat anti-glare layer was formed in a manner similar to that in Example 1. The in-plane retardation of the resin sheet was 4100 to 4500 nm.

A polycarbonate film (FS-2000 manufactured by Mitsubishi Gas Chemical Company, Inc., 200 μmt) as the resin film (X) was stuck to the base material layer side of the resin sheet by means of an adhesive (acrylic OCA), thereby obtaining a resin sheet for molding. The thickness of the polycarbonate film was 0.2 mm, and the in-plane retardation was 45 nm or less.

Comparative Example 9: PMMA (Tg: 105°C)/low Tg PC (Tg: 125°C)/0.8 mmt

A layered body consisting of a base material layer and a high hardness resin layer was formed using a multilayer extrusion apparatus having a single screw extruder with a screw diameter of 32 mm, a single screw extruder with a screw diameter of 65 mm, a feed block connected to the respective extruders and a T-die connected to the feed block. Specifically, a high hardness resin (acrylic resin; PARAPET HR-1000L (PMMA); manufactured by Kuraray Co., Ltd.) was continuously introduced into the single screw extruder with the screw diameter of 32 mm and extruded at a cylinder temperature of 250°C and a discharge rate of 2.6 kg/hour. Further, a polycarbonate resin (Iupizeta T-1380; manufactured by Mitsubishi Gas Chemical Company, Inc.) was continuously introduced into the single screw extruder with the screw diameter of 65 mm and extruded at a cylinder temperature of 240°C and a discharge rate of 32.0 kg/hour.

The extruded high hardness resin and the extruded polycarbonate resin were introduced into the feed block having a distribution pin for two types of two layers, and the high hardness resin and the polycarbonate resin were layered at 240°C. It was further introduced into the T-die at 240°C to be extruded into a sheet shape, and using 3 mirror-finished rolls each at 110°C, 140°C and 185°C from the upstream side, it was transferred on the mirror surfaces and cooled, thereby obtaining the layered body consisting of the high hardness resin layer and the polycarbonate resin layer (base material layer). The thickness of the obtained layered body was 0.8 mm, and the thickness of the high hardness resin layer near the center thereof was 60 μm. The stretching magnification was 1.43 times.

A hard coat anti-glare layer was formed in a manner similar to that in Example 1. The in-plane retardation of the resin sheet was 5800 to 6300 nm.

A polycarbonate film (FS-2000 manufactured by Mitsubishi Gas Chemical Company, Inc., 200 μmt) as the resin film (X) was stuck to the base material layer side of the resin sheet by means of an adhesive (acrylic OCA), thereby obtaining a resin sheet for molding. The thickness of the polycarbonate film was 0.2 mm, and the in-plane retardation was 45 nm or less.

Comparative Example 10: FPC0220 (Tg: 184°C)/T1380 (125°C)/1.2 mmt

Using the same multilayer extrusion apparatus as Example 1, a layered body consisting of a base material layer and a high hardness resin layer was formed. Specifically, a high hardness resin (B5) (polycarbonate resin containing a structural unit represented by general formula (8); Iupizeta FPC0220 (manufactured by Mitsubishi Gas Chemical Company, Inc.)) was continuously introduced into the single screw extruder with the screw diameter of 35 mm and extruded at a cylinder temperature of 300°C and a discharge rate of 2.6 kg/hour. Further, a polycarbonate resin (Iupizeta T1380; manufactured by Mitsubishi Gas Chemical Company, Inc.) was continuously introduced into the single screw extruder with the screw diameter of 65 mm and extruded at a cylinder temperature of 240°C and a discharge rate of 50.0 kg/hour.

The extruded high hardness resin and the extruded polycarbonate resin were introduced into the feed block

having a distribution pin for two types of two layers, and the high hardness resin and the polycarbonate resin were layered at 280°C. It was further introduced into the T-die at 280°C to be extruded into a sheet shape, and using 3 mirror-finished rolls each at 120°C, 130°C and 190°C from the upstream side, it was transferred on the mirror surfaces and cooled and stretched, thereby obtaining the layered body consisting of the high hardness resin layer and the polycarbonate resin layer (base material layer). The stretching magnification was 1.3 times. The thickness of the obtained layered body was 1.2 mm, and the thickness of the high hardness resin layer near the center thereof was 60 μm.

A hard coat anti-glare layer was formed in a manner similar to that in Example 1. The in-plane retardation of the resin sheet was 6200 to 6500 nm.

A polycarbonate film (FS-2000 manufactured by Mitsubishi Gas Chemical Company, Inc., 200 μmt) as the resin film (X) was stuck to the base material layer side of the resin sheet by means of an adhesive (acrylic OCA), thereby obtaining a resin sheet for molding. The thickness of the polycarbonate film was 0.2 mm, and the in-plane retardation was 45 nm or less.

Comparative Example 11: S-1000 (Tg: 147°C) alone/2 mmt

Instead of a high hardness resin, the same polycarbonate resin as that contained in a base material layer was used to form a layered body. As an extrusion apparatus, the same multilayer extrusion apparatus as Example 1 was used. Specifically, a polycarbonate resin (Iupilon S-1000 (manufactured by Mitsubishi Engineering-Plastics Corporation); pencil hardness: 3B) was continuously introduced into the single screw extruder with the screw diameter of 35 mm and extruded at a cylinder temperature of 280°C and a discharge rate of 2.6 kg/hour. Further, a polycarbonate resin (Iupilon S-1000; manufactured by Mitsubishi Engineering-Plastics Corporation) was continuously introduced into the single screw extruder with the screw diameter of 65 mm and extruded at a cylinder temperature of 280°C and a discharge rate of 83.0 kg/hour.

The extruded polycarbonate resins were introduced into the feed block having a distribution pin for two types of two layers, and they were layered at 280°C. It was further introduced into the T-die at 280°C to be extruded into a sheet shape, and using 3 mirror-finished rolls each at 120°C, 130°C and 190°C from the upstream side, it was transferred on the mirror surfaces and cooled and stretched, thereby obtaining the layered body of the polycarbonate resins. The stretching magnification was 1.17 times. The thickness of the obtained layered body was 2 mm.

A hard coat anti-glare layer was formed in a manner similar to that in Example 1. The in-plane retardation of the resin sheet was 6200 to 6500 nm.

A polycarbonate film (FS-2000 manufactured by Mitsubishi Gas Chemical Company, Inc., 200 μmt) as the resin film (X) was stuck to the base material layer side of the resin sheet by means of an adhesive (acrylic OCA), thereby obtaining a resin sheet for molding. The thickness of the polycarbonate film was 0.2 mm, and the in-plane retardation was 45 nm or less.

The resin sheets produced in the Examples and Comparative Examples were evaluated with respect to the hardness, the presence or absence of a crack after molding, and the presence or absence of a flow mark, transfer of a mold scratch and fusion bonding of a protective film. The results are shown in Table 1 below.

Table 1

| | TgB *1 (°C) | TgA *2 (°C) | Difference in Tg (TgB-TgA) | Thickness of sheet *3 (mm) | Pencil hardness of resin sheet | Haze (%) | Flow mark | Crack after molding | Rainbow unevenness and coloring of sunglasses after molding | Re *4 of film (X) (nm) | Re of resin sheet (nm) |
|---|---|---|---|---|---|---|---|---|---|---|---|
| Example 1 | 124 | 125 | -1 | 1.2 | 2H | 9 | Absent | Absent | Absent | 20 or less | 6200 to 6500 |
| Example 2 | 124 | 125 | -1 | 2 | 2H | 9 | Absent | Absent | Absent | 20 or less | 6200 to 6500 |
| Example 3 | 124 | 125 | -1 | 0.5 | 2H | 9 | Absent | Absent | Absent | 20 or less | 4100 to 4500 |
| Example 4 | 124 | 125 | -1 | 3.5 | 2H | 9 | Absent | Absent | Absent | 20 or less | 6800 to 7000 |
| Example 5 | 141 | 125 | 16 | 2 | 3H | 9 | Absent | Absent | Absent | 20 or less | 6200 to 6500 |
| Example 6 | 141 | 147 | -6 | 2 | 3H | 9 | Absent | Absent | Absent | 20 or less | 6200 to 6500 |
| Example 7 | 120 | 125 | -5 | 1.5 | 3H | 9 | Absent | Absent | Absent | 20 or less | 6200 to 6500 |
| Example 8 | 126 | 125 | 1 | 2 | 3H | 29 | Absent | Absent | Absent | 20 or less | 6200 to 6500 |
| Example 9 | 118 | 125 | -7 | 2 | 4H | 29 | Absent | Absent | Absent | 20 or less | 6200 to 6500 |
| Example 10 | 123 | 125 | -2 | 1.2 | 3H | 29 | Absent | Absent | Absent | 45 or less | 6200 to 6500 |
| Example 11 | 141 | 125 | 16 | 0.5 | 3H | 2 | Absent | Absent | Absent | 45 or less | 4100 to 4500 |
| Example 12 | 184 | 147 | 37 | 1.2 | 2H | 2 | Absent | Absent | Absent | 45 or less | 6200 to 6500 |
| Example 13 | 115 | 125 | -10 | 1.2 | 3H | 2 | Absent | Absent | Absent | 45 or less | 6200 to 6500 |

(continued)

| | TgB *1 (°C) | TgA *2 (°C) | Difference in Tg (TgB-TgA) | Thickness of sheet *3 (mm) | Pencil hardness of resin sheet | Haze (%) | Flow mark | Crack after molding | Rainbow unevenness and coloring of sunglasses after molding | Re *4 of film (X) (nm) | Re of resin sheet (nm) |
|---|---|---|---|---|---|---|---|---|---|---|---|
| Example 14 | 136 | 125 | 11 | 1.2 | 3H | 29 | Absent | Absent | Absent | 45 or less | 6200 to 6500 |
| Example 15 | 132 | 125 | 7 | 1.2 | 3H | 29 | Absent | Absent | Absent | 45 or less | 6200 to 6500 |
| Comparative Example 1 | 115 | 125 | -10 | 0.5 | 3H | 9 | Absent | Absent | Present | 300 to 400 | 4100 to 4500 |
| Comparative Example 2 | 115 | 125 | -10 | 1.2 | 3H | 9 | Absent | Absent | Present | 300 to 400 | 6200 to 6500 |
| Comparative Example 3 | 124 | 125 | -1 | 1.2 | 2H | 9 | Absent | Absent | Present | 20 or less | 3000 to 3500 |
| Comparative Example 4 | 124 | 125 | -1 | 1.2 | 2H | 9 | Absent | Absent | Present | 5000 to 6000 | 6200 to 6500 |
| Comparative Example 5 | 115 | 147 | -32 | 1.2 | 3H | 9 | Absent | Present | Absent | 45 or less | 6200 to 6500 |
| Comparative Example 6 | 115 | 147 | -32 | 2 | 3H | 9 | Absent | Present | Absent | 45 or less | 6200 to 6500 |
| Comparative Example 7 | 115 | 147 | -32 | 3.5 | 3H | 9 | Absent | Present | Absent | 45 or less | 6800 to 7000 |
| Comparative Example 8 | 115 | 147 | -32 | 0.5 | 3H | 9 | Absent | Present | Absent | 45 or less | 4100 to 4500 |
| Comparative Example 9 | 105 | 125 | -20 | 0.8 | 3H | 9 | Absent | Present | Absent | 45 or less | 5800 to 6300 |
| Comparative Example 10 | 184 | 125 | 59 | 1.2 | 2H | 9 | Present | Absent | Absent | 45 or less | 6200 to 6500 |

(continued)

| | TgB *1 (°C) | TgA *2 (°C) | Difference in Tg (TgB-TgA) | Thickness of sheet *3 (mm) | Pencil hardness of resin sheet | Haze (%) | Flow mark | Crack after molding | Rainbow unevenness and coloring of sunglasses after molding | Re *4 of film (X) (nm) | Re of resin sheet (nm) |
|---|---|---|---|---|---|---|---|---|---|---|---|
| Comparative Example 11 | - | 147 | - | 2 | HB | 9 | Absent | Absent | Absent | 45 or less | 6200 to 6500 |

*1 "TgB" means Tg of the high hardness resin.
*2 "TgA" means Tg of the polycarbonate resin.
*3 "Thickness of sheet" means the total thickness of the base material layer and the high hardness resin layer.
*4 "Re" means a value of in-plane retardation.

It is understood that the resin sheet of the present invention has excellent hardness, does not have any flow mark, and does not have any abnormal appearance such as a crack after thermoforming.

The several embodiments of the present invention were described above, but these embodiments were presented as examples and it is not intended to limit the scope of the invention thereby. These novel embodiments can be practiced in other various modes and can be omitted, substituted or modified variously without departing from the gist of the present invention. These embodiments and modifications thereof are included in the scope or gist of the invention and also included in the scope of the inventions recited in the claims and equivalents thereof.

## Claims

**1.** A resin sheet for molding comprising:

a base material layer containing a polycarbonate resin (al);
a high hardness resin layer containing a high hardness resin on at least one surface of the base material layer;
a hard coat layer or a hard coat anti-glare layer on a surface of the high hardness resin layer on at least one side, wherein
the glass transition points of the polycarbonate resin (a1) and the high hardness resin satisfy the following relationship:

-10°C ≤ (the glass transition point of the high hardness resin) - (the glass transition point of the polycarbonate resin (a1)) ≤ 40°C;
the in-plane retardation of the resin sheet as measured at a wavelength of 543 nm is 4,000 nm or more; and
a resin film (X) that has an in-plane retardation of 50 nm or less as measured at a wavelength of 543 nm is stuck to one side of the resin sheet by means of an adhesive layer that contains an adhesive.

**2.** The resin sheet for molding according to claim 1, wherein the polycarbonate resin (a1) is an aromatic polycarbonate resin.

**3.** The resin sheet for molding according to claim 2, wherein the aromatic polycarbonate resin contains a structural unit represented by general formula (4a):

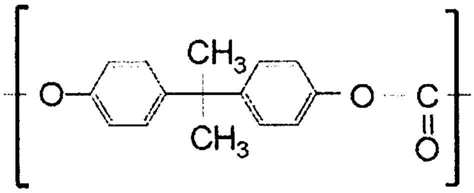

(4a)

**4.** The resin sheet for molding according to any one of claims 1 to 3, wherein the content of the polycarbonate resin (a1) is 75 to 100% by mass relative to the total mass of the base material layer.

**5.** The resin sheet for molding according to any one of claims 1 to 4, wherein the high hardness resin is selected from the group consisting of Resin (B1) to Resin (B6) below:

Resin (B1): a copolymer containing a (meth)acrylic acid ester structural unit (a) represented by general formula (1) below:

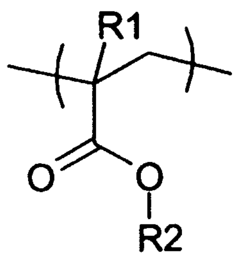

(1)

(wherein R1 represents a hydrogen atom or a methyl group, and R2 represents a $C_1$-$C_{18}$ alkyl group), and an aliphatic vinyl structural unit (b) represented by general formula (2) below:

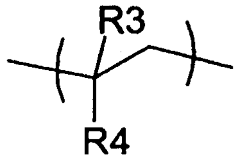

(2)

(wherein R3 represents a hydrogen atom or a methyl group, and R4 is a cyclohexyl group which may be substituted with a $C_1$-$C_4$ hydrocarbon group); or an alloy of the copolymer and Resin (B2);

Resin (B2): a copolymer (D) containing 6 to 77% by mass of a (meth)acrylic acid ester structural unit, 15 to 71% by mass of a styrene structural unit and 8 to 23% by mass of an unsaturated dicarboxylic acid structural unit, or an alloy of the copolymers (D), or an alloy of the copolymer (D) and another high hardness resin, or an alloy of the copolymer (D) and an acrylic resin;

Resin (B3): a copolymer containing a structural unit (c) represented by general formula (6) below:

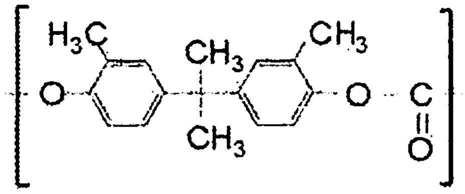

(6)

and optionally a structural unit (d) represented by general formula (7) below:

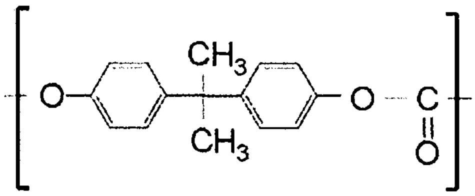

(7);

Resin (B4): a copolymer (G) containing 5 to 20% by mass of a styrene structural unit, 60 to 90% by mass of a (meth)acrylic acid ester structural unit and 5 to 20% by mass of an N-substituted maleimide structural unit, or an alloy of the copolymer (G) and the aforementioned Resin (B2);

Resin (B5): a resin containing a structural unit (e) represented by general formula (8) below:

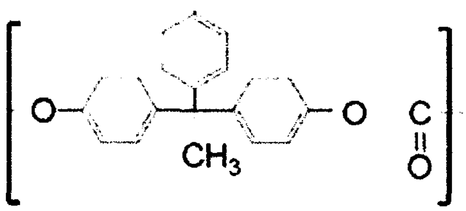

(8);

Resin (B6): an alloy of an acrylic resin and a copolymer containing 50 to 95% by mass of a styrene structural unit and 5 to 50% by mass of an unsaturated dicarboxylic acid unit.

6. The resin sheet for molding according to any one of claims 1 to 5, wherein the content of the high hardness resin is 70 to 100% by mass relative to the total mass of the high hardness resin layer.

7. The resin sheet for molding according to any one of claims 1 to 6, wherein the total thickness of the base material layer and the high hardness resin layer is 0.5 mm to 3.5 mm.

**8.** The resin sheet for molding according to any one of claims 1 to 7, wherein the ratio of the thickness of the base material layer in the total thickness of the base material layer and the high hardness resin layer is 75% to 99%.

**9.** The resin sheet for molding according to any one of claims 1 to 8, which has a haze of 2 to 30%.

**10.** The resin sheet for molding according to any one of claims 1 to 9, wherein the pencil hardness of the surface of the hard coat layer of the resin sheet for molding is 2H or harder.

**11.** The resin sheet for molding according to any one of claims 1 to 10, wherein the resin film (X) of the resin sheet for molding consists of a polycarbonate film containing the polycarbonate resin (a1).

**12.** The resin sheet for molding according to any one of claims 1 to 10, wherein the resin film (X) of the resin sheet for molding consists of a film touch sensor obtained by providing a sensor electrode to a polycarbonate film.

**13.** The resin sheet for molding according to any one of claims 1 to 12, wherein the adhesive layer of the resin sheet for molding is an optical adhesive sheet.

**14.** A resin molded article obtained by molding with use of the resin sheet for molding according to any one of claims 1 to 13.

## INTERNATIONAL SEARCH REPORT

International application No. PCT/JP2020/029751

A. CLASSIFICATION OF SUBJECT MATTER
B32B 27/36(2006.01)i; B32B 7/023(2019.01)i; B32B 7/027(2019.01)i; B32B 27/30(2006.01)i
FI: B32B27/36 102; B32B7/023; B32B7/027; B32B27/30 A
According to International Patent Classification (IPC) or to both national classification and IPC

B. FIELDS SEARCHED
Minimum documentation searched (classification system followed by classification symbols)
B32B1/00-43/00; B29C51/00-51/46; G06F3/041

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2017/150646 A1 (MITSUBISHI GAS CHEMICAL CO., INC.) 08.09.2017 (2017-09-08) claims, paragraphs [0005]-[0006], [0021], [0040], [0060] | 1-14 |
| A | WO 2016/060100 A1 (MITSUBISHI GAS CHEMICAL CO., INC.) 21.04.2016 (2016-04-21) claims, paragraphs [0068], [0097], examples 1-11 | 1-14 |
| A | JP 2014-157289 A (TOYOBO CO., LTD.) 28.08.2014 (2014-08-28) claims, paragraphs [0005], [0021], [0031]-[0032], [0056], fig. 1 | 1-14 |
| A | JP 2015-132691 A (DAINIPPON PRINTING CO., LTD.) 23.07.2015 (2015-07-23) claims, paragraphs [0014], [0022], [0045]-[0048] | 1-14 |
| A | WO 2019/031072 A1 (ALPS ELECTRIC CO., LTD.) 14.02.2019 (2019-02-14) claims, paragraphs [0027]-[0036], fig. 1 | 1-14 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 October 2020 (09.10.2020) | 20 October 2020 (20.10.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

**INTERNATIONAL SEARCH REPORT**

International application No. PCT/JP2020/029751

C (Continuation). DOCUMENTS CONSIDERED TO BE RELEVANT

| Category* | Citation of document, with indication, where appropriate, of the relevant passages | Relevant to claim No. |
|---|---|---|
| A | WO 2016/104003 A1 (NISSHA PRINTING CO., LTD.) 30.06.2016 (2016-06-30) claims, paragraphs [0013]-[0015], [0017], fig. 1-2 | 1-14 |

Form PCT/ISA/210 (continuation of second sheet) (January 2015)

**INTERNATIONAL SEARCH REPORT**
Information on patent family members

International application No.
PCT/JP2020/029751

| Patent Documents referred in the Report | Publication Date | Patent Family | Publication Date |
|---|---|---|---|
| WO 2017/150646 A1 | 08 Sep. 2017 | US 2019/0054674 A1 claims, paragraphs [0006]-[0008], [0042], [0071], [0097]-[0099]<br>EP 3425448 A1<br>CN 108700764 A<br>KR 10-2018-0121572 A | |
| WO 2016/060100 A1 | 21 Apr. 2016 | US 2017/0306089 A1 claims, paragraphs [0149]-[0153], [0202]-[0207], examples 1-11<br>EP 3208087 A1<br>CN 106794685 A<br>KR 10-2017-0069261 A | |
| JP 2014-157289 A | 28 Aug. 2014 | (Family: none) | |
| JP 2015-132691 A | 23 Jul. 2015 | (Family: none) | |
| WO 2019/031072 A1 | 14 Feb. 2019 | US 2020/0081578 A1 claims, paragraphs [0054]-[0065], fig. 1A, 1B<br>KR 10-2020-0026973 A | |
| WO 2016/104003 A1 | 30 Jun. 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001334609 A
- JP 2009234184 A
- JP H0440183 B
- JP 2010284910 A
- JP 2009196153 A